# EUROPÄISCHE PATENTSCHRIFT

(11) **EP 3 074 449 B1**
(45) Veröffentlichungstag und Bekanntmachung des Hinweises auf die Patenterteilung: **14.06.2017**
(21) Anmeldenummer: 14803171.9
(22) Anmeldetag: 28.11.2014
(51) Int. Cl.: C08G 73/02, C08G 63/08

(54) **ADDITIONSVERBINDUNGEN VON POLYAMINEN**
ADDITIONAL POLYAMINE COMPOUNDS
COMPOSÉS D'ADDITION DE POLYAMINES

(30) Priorität: 29.11.2013 EP 13195200
(43) Veröffentlichungstag der Anmeldung: 05.10.2016
(73) Patentinhaber: BYK-Chemie GmbH, 46483 Wesel (DE)
(72) Erfinder: GÖBELT, Bernd, 46487 Wesel (DE); OKKEL, Andreas, 46483 Wesel (DE); OMEIS, Jürgen, 46286 Dorsten-Lembeck (DE); PRITSCHINS, Wolfgang, 46487 Wesel (DE); BÖMER, Jörg, 46487 Wesel (DE); STELZ, Sabine, 46047 Oberhausen (DE); ESSER, Andrea, 46485 Wesel (DE)
(74) Vertreter: Leifert & Steffan
(86) Internationale Anmeldenummer: PCT/EP2014/075988
(87) Internationale Veröffentlichungsnummer: WO 2015/079033

(56) Entgegenhaltungen:
- EP-A1- 1 593 700
- WO-A1-2012/107379

## Beschreibung

Aminogruppen enthaltendes Polymer, Verfahren zu seiner Herstellung, seine Verwendung sowie Lacke und Kunststoffe enthaltend das Polymer.

Die vorliegende Erfindung betrifft als Dispergiermittel und als Dispersionsstabilisatoren geeignete Additionsverbindungen und deren Salze. Die Erfindung betrifft weiterhin Verfahren zur Herstellung dieser Additionsverbindungen, deren Verwendung als Dispergiermittel und Dispersionsstabilisatoren für organische und anorganische Pigmente sowie Füllstoffe in organischen und wäßrigen Systemen und in flüssige Systeme einzuarbeitende pulver- oder faserförmige Feststoffe, die mit solchen Dispergiermitteln beschichtet sind. Der Gegenstand der vorliegenden Erfindung ergibt sich aus den unabhängigen Patentansprüchen. Die abhängigen Patentansprüche betreffen vorteilhafte Ausgestaltungen der Erfindung.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/ oder neutraler Struktur. Diese Stoffe werden in kleiner Menge entweder direkt auf den Feststoff aufgebracht oder dem Dispergiermedium zugesetzt. Zu beachten ist, dass auch nach vollständiger Deflockulierung der Feststoffagglomerate in Primärteilchen (nach dem Dispergierprozess) Reagglomerationen auftreten können, wodurch der Dispergieraufwand teilweise oder vollständig zunichte gemacht wird. Als Folge von unzulänglicher Dispergierung bzw. von Reagglomeration treten typischerweise unerwünschte Effekte auf, wie Viskositätsanstieg in flüssigen Systemen, Farbtondrift sowie Glanzverlust in Lacken bzw. in Beschichtungen und Verringerung der mechanischen Festigkeit sowie der Materialhomogenität in Kunststoffen.

Als Netz- und Dispergiermittel kommen in der Praxis verschiedenartige Verbindungstypen in Frage. Dies ist insbesondere darin begründet, dass eine hohe Anzahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert. Eine Substanzklasse, die als Netz- und Dispergiermittel eine breite Anwendung findet sind steitenkettenhaltige Polymere, die einen Kern bestehend aus Polyethyleniminen enthalten. Hierbei kann die Seitenkette über eine chemische Bindung mit dem Polyethyleniminkern verbunden sein, wie zum Beispiel in EP 1 593 700 und in US 8 268 957 beschrieben, oder es ist eine Salzbildung des Polyethyleniminkerns möglich, indem die Seitenkette saure Gruppen trägt. Diese Verbindungen sind beispielsweise in EP 0 893 155 beschrieben.

Die in den oben genannten Patentanmeldungen beschrieben Polyamine, die zur Herstellung der Dispergiermittel beschrieben werden, sind lineare oder verzweigte Polyamine mit kurzen Alkylenbrücken von C₂ bis C₄, wie Polyethylenimine. Die Netz- und Dispergiermittel, die mit diesen Polyaminen hergestellt werden, haben eine hohe Dichte an Aminhaftgruppen im Kern. Diese können, gerade wenn sie nicht versalzt sind, bei säurekatalysierten Lackformulierungen den Säurekatalysator neutralisieren und somit die Aushärtungsreaktion negativ beeinflussen. Weiterhin gibt es nur eine geringe Anzahl von technisch verfügbaren aliphatischen verzweigten Polyaminen und somit besteht nur eine geringe Möglichkeit die Gestalt, die Polarität und die Amindichte des Polyamins strukturell zu variieren.

Der vorliegenden Erfindung lag somit die Aufgabe zugrunde gegenüber dem oben genannten Stand der Technik verbesserte Netz- und Dispergiermittel bereitzustellen, die einen geringen Einfluß auf säurekatalysiert härtende Lacke haben. Darüber hinaus sollte für Polyethylenimine als Polyamin-Komponente von Netz- und Dispergiermitteln eine Alternative gefunden werden, die es ermöglicht eine größere strukturelle Vielfalt des Polyamins zu realisieren um damit Eigenschaften wie die Verträglichkeit gegenüber verschiedenen Bindemitteln einzustellen.

Die Lösung dieser Aufgabe ist ein Aminogruppen enthaltendes Polymer PAS oder dessen durch Umsetzung mit einer Säure erhältliches Salz, wobei das Polymer durch eine mehrstufige Synthese erhältlich ist, bei der

ein Zwischenprodukt PA durch Reaktion mindestens einer Verbindung P mit mindestens einem Amin A hergestellt wird, wobei die Verbindung P
2 bis 6 gegenüber Hydroxylgruppen und/oder Aminogruppen reaktive Gruppen enthält und
das Amin A
(i) m = 1 bis 8 primäre und/oder sekundäre Aminogruppen,
(ii) n = 0 bis 5 Hydroxylgruppen und
(iii) l = 0 bis 5 tertiäre Aminogruppen enthält, wobei
(iv) m + n ≥ 2 beträgt und
(v) die Verbindung A neben Stickstoffatomen, Sauerstoffatomen und Hydroxylgruppen nur Kohlenwasserstoffgruppen enthält und
das Zwischenprodukt PA Struktureinheiten der allgemeinen Formel (I) 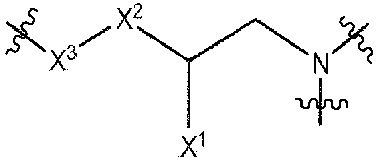 aufweist, in der
X¹ = H oder OH
X² = CH₂ oder C=O und
X³ = O oder NH
ist, und wobei
das Zwischenprodukt PA
(a) mit einer oder mehreren gegenüber Hydroxylgruppen und/oder Aminogruppen reaktiven Komponenten S zu einem Aminogruppen enthaltenden Polymer umgesetzt wird und/oder
(b) unter Ringöffnungspolymerisation mit mindestens einem Lacton oder einem Gemisch von Lactonen zu einem Aminogruppen enthaltenden Polymer umgesetzt wird
(c) und 0-80% der in dem Zwischenprodukt PA ursprünglich enthaltenen primären und sekundären Aminogruppen mit einer oder mehreren Spezies einer Komponente U, gewählt aus der Gruppe der hydroxylfunktionellen Acrylate und/oder einer zyklischen Verbindung gewählt aus der Gruppe der Oxirane und Oxetane, der Lactone und zyklischen Carbonate unter Einführung von Hydroxylgruppen umgesetzt werden,
wobei die Umsetzungen gemäß (a), (b) und (c) in jeder beliebigen Kombination und zeitlichen Reihenfolge zueinander erfolgen können.

Das Zeichen 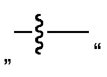 bedeutet, dass die dargestellte Struktur mit einer übergeordneten allgemeinen Struktur verknüpft ist.

Die Verbindung P enthält zweckmäßig 2 bis 6, bevorzugt 2 bis 3 und besonders bevorzugt 2 gegenüber Hydroxylgruppen und/oder Aminogruppen reaktive Gruppen, zweckmäßig gewählt aus der Gruppe der Acrylate, Epoxide, Carbonsäuren und Carbonsäurederivate, wie Carbonsäureester, Carbonsäurechloride und Carbonsäureanhydride, wobei aus der Gruppe der Carbonsäurederivate die Carbonsäureester besonders bevorzugt sind. Die obere Grenze für das zahlenmittlere Molekulargewicht (Mₙ) von P liegt zweckmäßig bei 1000, bevorzugt 600, mehr bevorzugt 300 und besonders bevorzugt 250.

Bevorzugte Verbindungen A enthalten hauptsächlich Methylengruppen -(CH2)n-, wobei n zweckmäßig 1-6, bevorzugt 2-3 und besonders bevorzugt 2 ist. A enthält mindestens 1, bevorzugt 2 und besonders bevorzugt 3-5 Aminogruppen. Die maximale Anzahl an Aminoguppen liegt bei 8, bevorzugt 6 und besonders bevorzugt 5. Die obere Grenze für das zahlenmittlere Molekulargewicht (Mₙ) von A liegt zweckmäßig bei 2000, bevorzugt 1000, mehr bevorzugt 600, besonders bevorzugt 300 und ganz besonders bevorzugt 250.

Beispiele für geeignete aminhaltige Verbindungen A sind insbesondere aliphatische, cycloaliphatische, gemischt aliphatisch-cycloaliphatische, aromatische und/oder araliphatische Di- und/oder Polyamine, oder Gemische, die zwei oder mehr dieser Amine enthalten. Beispiele dafür sind Ethylendiamin, 1,2- und 1,3-Diaminopropan, 1,4-Diaminobutan, Hexamethylendiamin, Diethylentriamin (DETA), Triethylentetramin (TETA), Tetraethylenpentamin (TEPA), Pentaethylenhexamin, Hexaethylenheptamin und höhere Homologe, höhere lineare Kondensate der allgemeinen Formel NH₂-(C₂H₄NH)ₙ-C₂H₄-NH₂ mit n < 7, Dipropylentriamin, Bis(hexamethylen)triamin, (3-(2-Aminoethyl)aminopropylamin, N,N-Bis(3-aminopropyl)methylamin, Tetramethyliminobispropylamin, N,N-Dimethyldipropylentriamin, Bis-(3-dimethylaminopropyl)amin und N,N'-Bis(3-aminopropyl)-ethylendiamin, Tris(3-aminopropyl)amin, Tris(2-aminoethyl)amin; weitere Beispiele sind Isophorondiamin, Priamin 1074 der Firma Croda, 4,4'-Diamino-diphenylmethan, 1,3- und 1,4-Xylylendiamin, 4,4'-Diaminodicyclohexylmethan, 1,4-Bis(aminomethyl)cyclohexan, Di und/oder Polyamine auf Basis von Polyalkylenoxiden, wie niedermolekulare Polyether mit Aminogruppen wie zum Beispiel die von Huntsman unter dem Handelsnamen Jeffamine^{®} Polyoxyalkylenamine vetriebenen Typen D-230, D-400, D-2000, XTJ-510, XTJ-500, XTJ-501, XTJ-502, XTJ-504 (Jeffamin EDR 148), HK-511, T-403, XTJ-509 und T-5000.

Beispiele für aminhaltige Verbindungen A, die neben einem primären oder sekundären Amin weitere dem Ester gegenüber reaktive Gruppen wie primäre oder sekundäre Amine und/oder Alkohole enthalten, sind Verbindungen, die drei primäre oder sekundäre Aminogruppen tragen wie Diethylentriamin und Amine, die neben einer primären Aminogruppe mindestens eine weitere dem Ester gegenüber reaktive Gruppe oder neben einer sekundären Aminogruppe mindestens zwei weitere dem Ester gegenüber reaktive Gruppen enthalten, wie Monoethanolamin, 2-Amino-2-(hydroxymethyl)-1,3-propanediol, 2-(2-Aminoethoxy)ethanol, Aminoethylethanolamine, 2-Amino-2-desoxy-D-glucosechitosamin und Diethanolamin.

Als Komponente A können ebenfalls Mischungen dieser Verbindungen eingesetzt werden.

Die Polyamine PA können auf verschiedenen Synthesewegen hergestellt werden.

### Möglichkeit 1:

Nach diesem Syntheseweg wird das Polyamin PA durch die Umsetzung einer Komponente P mit einer Komponente A aufgebaut. Das Polyamin PA wird durch eine Reaktion aufgebaut, bei der Bausteine **CG**ₕ mit (h = 2 - 8) eingesetzt werden oder während der Reaktion aus einem Amin A und einer Komponente P entstehen. Der Baustein **CG**ₕ besitzt mindestens eine Carbonsäureestergruppe **C**' und mindestens zwei der Carbonsäureestergruppe **C**' gegenüber reaktive Gruppen **G'**, wobei wenn nicht eine dieser reaktiven Gruppen **G'** ein Amin ist, der Baustein **CG**ₕ noch mindestens ein tertiäres Amin in der Struktur enthält.

Die Theorie des Aufbaus von verzweigten Polyaminen, wie unter Möglichkeit 1 aufgeführt, wird beispielsweise von Gao und Yan in Prog. Polym. Sci. 29 (2004) 183 - 275 in Kapitel 3.4, S. 208 - 212 beschrieben.

Es kann das Molekül **CG**ₕ durch Reaktion einer Komponente P, für Möglichkeit 1 gewählt aus der Gruppe von ethylenisch ungesättigten Esterverbindungen, bei denen die C=C-Doppelbindung und die Carbonyldoppelbindung des Esters konjugiert sind, mit einem Amin A, gewählt aus der Gruppe von Diaminen oder Aminen, die neben einem primären oder sekundären Amin 2-7 weitere dem Ester gegenüber reaktive Gruppen wie primäre oder sekundäre Amine und/oder Alkohole enthalten, aufgebaut werden. Ein Zugang zu verzweigten Polyaminen wird beispielsweise in CN02111578.8, WO2011/076785 und WO2012/175622 beschrieben, wobei in WO2011/076785 und WO2012/175622 für die Komponente P nur die Verwendung von α,β-ungesättigten Estern mit einer Mehrzahl an Estergruppen beschrieben wird.

Beispiele für Komponente P nach Möglichkeit 1, gewählt aus der Gruppe von ethylenisch ungesättigten Esterverbindungen, bei denen die C=C-Doppelbindung und die Carbonyldoppelbindung des Esters konjugiert sind, sind
Alkylacrylate, wie zum Beispiel Methylacrylat, Ethylacrylat, n-Propylacrylat, i-Propylacrylat, n-Butylacrylat, i-Butylacrylat, t-Butylacrylat, 2-Ethylhexylacrylat, Cyclohexylacrylat und Laurylacrylat;
Monoacrylate von kurzkettigen Ethern, wie Tetrahydrofurfurylacrylat, Methoxyethoxyethylacrylat, 1-Butoxypropylacrylat, Cyclohexyloxymethylacrylat, Methoxymethoxyethylacrylat, Benzyloxymethylacrylat, Furfurylacrylat, 2-Butoxyethylacrylat, 2-Ethoxyethylacrylat, Allyloxymethylacrylat,
1-Ethoxybutylacrylat, 1-Ethoxyethylacrylat, Ethoxymethylacrylat;
Maleinsäurediester, wie Dimethylmaleinat, Diethylmaleinat und Dibutylmaleinat; Fumarsäurediester, wie Dimethylfumarat, Diethylfumarat und Dibutylfumarat; Itakonsäureester, wie Itakonsäuredimethylester und Itakonsäurediethylester.
Als Komponente P nach Möglichkeit 1 können ebenfalls Mischungen dieser Verbindungen eingesetzt werden.

Bevorzugte Komponenten P nach Möglichkeit 1 sind Verbindungen gewählt aus der Gruppe der Acrylsäureester, mehr bevorzugt sind kurzkettige Alkylacrylate und besonders bevorzugt sind Methylacrylat und Ethylacrylat.

Die Komponente P und das Amin A werden zweckmäßig im molaren Verhältnis von 1 zu 0,5 bis 1 zu 3, bevorzugt 1 zu 0,8 bis 1 zu 2, besonders bevorzugt 1 zu 1 bis 1 zu 1,7 und ganz besonders bevorzugt 1 zu 1,01 bis 1 zu 1,5 eingesetzt.

Die Größe des Polyamins PA nach Möglichkeit 1 kann gesteuert werden durch:
1) Variation der Reaktionsbedingungen, wie zum Beispiel die Wahl des Lösemittels
2) das molare Verhältnis von Amin A zu Komponente P

Der Aufbau der Polyamine PA nach Möglichkeit 1 erfolgt beispielsweise in zwei Schritten. Im ersten Schritt wird der **CGₕ**-Baustein hergestellt. Der Aufbau der **CGₕ**-Bausteine erfolgt über die Michaeladdition einer primären oder sekundären Aminogruppe an die zur Carbonyldoppelbindung des Esters konjugierte C=C-Doppelbindung. Diese Umsetzungen erfolgen zweckmäßig in einem Temperaturbereich von 0 bis 100 °C, bevorzugt von 10 bis 80 °C und besonders bevorzugt von 15 bis 50 °C. Die Michaeladdition kann sowohl ohne Lösemittel als auch in geeigneten polaren und unpolaren Lösemitteln durchgeführt werden. Geeignete Lösemittel sind Lösemittel, in denen die Reaktanden und die Reaktionsprodukte zumindest teilweise löslich sind. Die Lösemittel können im Produkt belassen oder entfernt werden. In den Fällen, wo die Lösemittel entfernt werden sollen, werden zweckmäßig leicht flüchtige Lösemittel verwendet. Wasser und niedermolekulare Alkohole wie zu Beispiel Methanol, Ethanol, Propanol, Isopropanol und Butanol lassen sich zum Beispiel gut im späteren Verlauf der Synthese oder der Anwendung destillativ entfernen.

Die Reaktionskontrolle der Michaeladdition kann via NMR-Messungen erfolgen, wobei der Umsatz der zur Carbonyldoppelbindung des Esters konjugierten C=C-Doppelbindung verfolgt wird.

Das Produkt der Michaeladdition wird anschließend zum Polyamin PA polykondensiert. Diese Umsetzungen erfolgen zweckmäßig in einem Temperaturbereich von 50 bis 180 °C, bevorzugt 70 bis 160 °C und besonders bevorzugt 80 bis 150 °C. Der bei der Carbonsäureesterspaltung gebildete Alkohol und gegebenenfalls das eingesetzte Lösemittel werden aus dem Reaktionsgemisch entfernt. Wird als Lösemittel Wasser gewählt, so wird eine geringere Größe der Polyamine erreicht als zum Beispiel in Alkoholen als Lösemittel oder ohne Lösemittel, da partiell Umsetzung der Ester zu Carbonsäuren auftritt und zur Salzbildung der Carbonsäuren mit den Aminogruppen führt.

Wird bei der Polykondensation als **CGₕ**-Baustein eine Verbindung eingesetzt, die über keine aminischen dem Ester gegenüber reaktive Gruppen verfügt, so wird die Polykondensation unter Verwendung von Katalysatoren wie z.B. Tetrabutyltitanat, Zirkoniumbutylat, Zirkoniumpropylat oder Zirconium-acetylacetonat durchgeführt. In der Literatur ist der Aufbau derartiger Strukturen unter Verwendung verschiedener Katalysatoren wie z.B. *para*-Toluolsulfonsäure (X. Wang, X. Yuan, T. Qiang, X. Chen, e-Polymers 2009, 115, 1-15) oder Zinkacetat sowie Tetrabutyltitanat (C. Gao et al., Biomacromolecules 2003, 4, 704-712) beschrieben.

Die Polykondensation kann sowohl ohne als auch unter Zugabe von Kernmolekülen erfolgen. Beispiele für Kernmoleküle sind Ammoniak oder als Amin A geeignete Amine. Bevorzugte Amine sind 2 bis 3 primäre Aminogruppen enthaltende Verbindungen wie zum Beispiel Tris(2-aminoethyl)amin und Tris(3-aminopropyl)amin. Findet die Polykondensation unter Verwendung eines Katalysators statt, sind auch Hydroxylgruppen-enthaltende Verbindungen als Kernmolekül geeignet. Diese enthalten zweckmäßig 1 bis 6 Hydroxylgruppen. Beispiele für Hydroxylgruppen-enthaltende Kernmoleküle sind 1,1,1-Trimethylolpropan, Triethanolamin, Glycerin, Diglycerol, Triglycerol, 1,3,5,Tris-(2-hydroxyethyl)cyanursäure und Sorbitol.

Die Größe des Polyamins PA kann hierbei durch das molare Verhältnis des Kernmoleküls zum **CGₕ**-Baustein gesteuert werden.

### Möglichkeit 2:

Neben den Polyaminen PA hergestellt über eine einstufige Polykondensation nach Möglichkeit 1, kann das Polyamin PA ausgehend von den gleichen Komponenten A und P ebenfalls über eine schrittweise Synthese schalenweise aufgebaut werden. Dazu werden im Gegensatz zu Möglichkeit 1 die Komponenten A und P in einer Synthesesequenz von zwei alternierenden Stufen abwechselnd im Überschuss eingesetzt und der Überschuss nach jeder Stufe destillativ entfernt. Der schrittweise Aufbau dendritischer Polyamidoamine wurde z. B. von D. A. Tomalia et al. in Polymer Journal 1985, 17, 117-132 sowie in US 4 568 737 beschrieben.

Hierbei wird das dendritische Polyamin PA ausgehend von Ammoniak oder einem Amin A wie z. B. Ethylendiamin über eine zweistufige Synthesesequenz hergestellt. Die erste Stufe der Synthese umfasst die vollständige Umsetzung des Aminkerns mit einem Überschuss an Alkylacrylat als Komponente P wie z.B. Methylacrylat mittels einer Michaeladdition und Entfernung des nicht reagierten Alkylacrylats. Die zweite Stufe umfasst die vollständige Umsetzung der resultierenden Ester mit einem Überschuss an Diamin als Komponente A wie z. B. Ethylendiamin und Entfernung des Überschusses an eingesetztem Diamin. Durch die wiederholte Sequenz dieser zwei Stufen wird schrittweise ein Polyamin PA aufgebaut.

Beispiele für geeignete aminhaltige Verbindungen A nach Möglichkeit 2 sind insbesondere aliphatische, cycloaliphatische, gemischt aliphatisch-cycloaliphatische, aromatische und/oder araliphatische Diamine, oder Gemische, die zwei oder mehr dieser Amine enthalten. Beispiele dafür sind Ethylendiamin, 1,2- und 1,3-Diaminopropan, 1,4-Diaminobutan und 1,6-Hexamethylendiamin.

Bevorzugte Komponenten A nach Möglichkeit 2 sind leichter flüchtige Diamine, da sich diese leichter entfernen lassen. Besonders bevorzugt sind Ethylendiamin, 1,2- und 1,3-Diaminopropan.

Beispiele für Komponente P nach Möglichkeit 2, gewählt aus der Gruppe von ethylenisch ungesättigten Esterverbindungen, bei denen die C=C-Doppelbindung und die Carbonyldoppelbindung des Esters konjugiert sind, sind Alkylacrylate, wie zum Beispiel Methylacrylat, Ethylacrylat, n-Propylacrylat, i-Propylacrylat, n-Butylacrylat, i-Butylacrylat, t-Butylacrylat, 2-Ethylhexylacrylat und Cyclohexylacrylat. Als Komponente P nach Möglichkeit 2 können ebenfalls Mischungen dieser Verbindungen eingesetzt werden.

Bevorzugte Komponenten P nach Möglichkeit 2 sind leichter flüchtige Acrylate, da sich diese leichter entfernen lassen. Besonders bevorzugt sind Methylacrylat und Ethylacrylat.

### Möglichkeit 3:

Herstellung von Polyamin PA durch Umsetzung der aminhaltigen Verbindungen A mit Verbindungen P, wobei die Verbindung P 2 bis 6 gegenüber Aminogruppen reaktive Gruppen, gewählt aus der Gruppe der Acrylate und/oder der Epoxide enthält. Es können auch Verbindungen mit Epoxidgruppen und Acrylgruppen wie zum Beispiel Glycidylacrylat zum Einsatz kommen. Ein Teil der Aminogruppen von A kann auch mit monofunktionellen Acrylaten und/ oder Epoxiden umgesetzt werden. Typischerweise enthalten diese monofunktionellen Verbindungen jeweils insgesamt 6 bis 70 Kohlenstoffatome.

Eine Anzahl von weniger als 6 Kohlenstoffatomen bewirkt häufig eine zu hohe Polarität, während mehr als 70 Kohlenstoffatome meist die universelle Verträglichkeit verschlechtern.

Diese Umsetzungen erfolgen zweckmäßig in einem Temperaturbereich von 20 bis 140 °C, bevorzugt bei maximal 120 °C und besonders bevorzugt bei maximal 100 °C. Bei der Umsetzung mit den Epoxiden ensteht eine sekundäre Hydroxygruppe und am reaktionsbeteiligten Stickstoffatom eine sekundäre oder tertiäre Aminogruppe.

### Beispiele für polyfunktionelle Acrylate sind:

Di-, tri-, tetrafunktionelle Polyester-, Polyether-, Polyether/ester-, Urethan oder Epoxiacrylate, Mono, Di-, Tri- oder Polyalkylenglykoldiacrylate wie z. B. Mono, Di-, Tri- oder Polyethylenglykoldiacrylat, Mono, Di-, Tri- oder Polypropylenglykoldiacrylat, Butandioldiacrylat, 1,6-Hexandioldiacrylat, Trimethylolpropantriacrylat, Neopentylglycolpropylenoxydiacrylat, Tricyclodecandioldiacrylat, Glycerindiacrylat, Glycerintriacrylat, Trimethylolpropantriacrylat, Di(trimethylolpropan)tetraacrylat, Pentaerythrittriacrylat, Dipentaerythritpentaacrylat.

### Beispiele für polyfunktionelle Epoxide sind:

Mono, Di-, Tri- oder Polyalkylenglykolglykoldiglycidether wie z. B: Mono, Di-, Tri- oder Polyethylenglykoldiglycidether, Propandioldiglycidether, Di-, Tri- oder Polypropylenglykoldiglycidether, 1,4-Butandioldiglycidether, 1,6-Hexandioldiglycidether, Cyclohexandimethanoldiglycidether, Neopentylglykoldiglycidether, Glycerintriglycidether, Di-, Tri- oder Polyglycerintriglycidether, Trimethylolpropantriglycidether, Pentaerythrittetraglycidether, Dipentaerythrittepentaglycidether.

Beispiele für monofunktionelle Acrylate sind Alkylacrylate, wie zum Beispiel Methylacrylat, Ethylacrylat, n-Propylacrylat, i-Propylacrylat, n-Butylacrylat, i-Butylacrylat, t-Butylacrylat, 2-Ethylhexylacrylat, Cyclohexylacrylat und Laurylacrylat;
Monoacrylate von kurzkettigen Ethern, wie Tetrahydrofurfurylacrylat, Methoxyethoxyethylacrylat, 1-Butoxypropylacrylat, Cyclohexyloxymethylacrylat, Methoxymethoxyethylacrylat, Benzyloxymethylacrylat, Furfurylacrylat, 2-Butoxyethylacrylat, 2-Ethoxyethylacrylat, Allyloxymethylacrylat, 1-Ethoxybutylacrylat, 1-Ethoxyethylacrylat, Ethoxymethylacrylat.

Geeignete monofunktionelle Epoxide sind zum Beispiel aliphatische, cycloaliphatische und/oder aromatische Glycidylether wie beispielsweise C₁-C₂₀- Alkylglycidylether, Phenylglycidether, Kresylglycidylether, Naphthylglycidylether, Butylglycidether, p-tert.-Butyl-phenylglycidether, 2-Ethyl-Hexylglycidether, C₁₂-C₁₄-Glycidether, Allylglycidylether, 2,3-Epoxypropylneodecanoat (Cardura® E 10, Resolution Performance Products).

Die erfindungsgemäßen Polymere PAS werden hergestellt, indem das Polyamin PA
(a) mit einer oder mehreren gegenüber Hydroxylgruppen und/oder Aminogruppen reaktiven Komponenten S zu einem Aminogruppen enthaltenden Polymer umgesetzt wird und/oder
(b) unter Ringöffnungspolymerisation mit mindestens einem Lacton oder einem Gemisch von Lactonen zu einem Aminogruppen enthaltenden Polymer umgesetzt wird
(c) und 0-80% der in dem Zwischenprodukt PA ursprünglich enthaltenen primären und sekundären Aminogruppen mit einer oder mehreren Spezies einer Komponente U, gewählt aus der Gruppe der hydroxylfunktionellen Acrylate und/oder einer zyklischen Verbindung gewählt aus der Gruppe der Oxirane und Oxetane, der Lactone und zyklischen Carbonate unter Einführung von Hydroxylgruppen umgesetzt werden,
wobei die Umsetzungen gemäß (a), (b) und (c) in jeder beliebigen Kombination und zeitlichen Reihenfolge zueinander erfolgen können.

Das Polyamin PA kann dabei mit einer oder mehreren der unten genannten reaktiven Komponenten S umgesetzt werden. Ebenso kann das Polyamin PA mit einer oder mehreren der unten genannten Komponenten U umgesetzt werden.

Die Komponenten S und gegebenenfalls U werden in einer solchen Menge eingesetzt, dass mindestens 10 %, zweckmäßig mindestens 25 % , bevorzugt mindestens 50 %, besonders bevorzugt mindestens 75 % und ganz besonders bevorzugt alle der in dem Zwischenprodukt PA ursprünglich enthaltenen reaktiven Gruppen umgesetzt werden können.

### Bei Komponente U handelt es sich um

### a) hydroxyfunktionelle Acrylate

Geeignete hydroxyfunktionelle Acrylate sind zum Beispiel 2-Hydroxyethylacrylat, 2-Hydroxypropylacrylat, 2-Hydroxybutylacrylat, 2-(2-Hydroxyethoxy)ethylacrylat, 2-Hydroxy-3-[3-(trimethoxysilyl)propoxy]propylacrylat, 2-Hydroxy-3-phenoxypropylacrylat, Polyethylenglykol-acrylate wie zum Beispiel die von NOF unter dem Handelsnamen BLEMMER^{®} vertriebenen Typen AE-90, AE-200 und AE-400, Polypropylenglykol-acrylate wie zum Beispiel die von NOF unter dem Handelsnamen BLEMMER^{®} vertriebenen Typen AP-150, AP-400 und AP-550 und Lacton-modifizierte Hydroxyethyl-acrylate wie zum Beispiel die von der DAICEL Corporation unter dem Handelsnamen Placcel vertriebenen FA-Typen.

### b) Oxirane und/oder Oxetane

Geeignete Oxirane sind zum Beispiel aliphatische, cycloaliphatische und/oder aromatische Glycidylether wie beispielsweise C1-C20- Alkylglycidylether, Phenylglycidether, Kresylglycidylether, Naphthylglycidylether, Butylglycidether, p-tert.-Butyl-phenylglycidether, 2-Ethyl-Hexylglycidether, C12-C14-Glycidether, Allylglycidylether oder 2,3-Epoxypropylneodecanoat (Carduraä E 10, Resolution Performance Products). Bevorzugt sind monofunktionelle Epoxide. Bei der Umsetzung mit den Epoxiden ensteht eine sekundäre Hydroxygruppe und am reaktionsbeteiligten Stickstoffatom eine sekundäre oder tertiäre Aminogruppe.
Geeignete Oxetane sind zum Beispiel 3-Ethyl-3-(phenoxymethyl)oxetan, 3-Ethyl-3-(hydroxymethyl)oxetan.

### c) Lactone

Geeignete Lactone sind zum Beispiel Propiolacton, Valerolacton, Butyrolacton, Caprolacton und/ oder substituierten Lactone. Bevorzugte Lactone sind ε-Caprolacton und δ-Valerolacton.

### d) zyklische Carbonate

Geeignet sind zyklische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen geeignet. Geeignete zyklische Carbonate sind zum Beispiel Ethylencarbonat, Propylencarbonat, Glycerincarbonat, 5-Methyl-5-propyltrimethylencarbonat, Trimethylencarbonat, 4-Methyltrimethylencarbonat, 5-Methyltrimethylencarbonat, 5,5-Dimethyltrimethylencarbonat oder 5,5-Diethyltrimethylencarbonat.

Als Komponente U können ebenfalls Mischungen dieser Verbindungen eingesetzt werden.

Bei Komponente S handelt es sich um

### a) Isocyanataddukte der allgemeinen Formel (II)

Y-O-CO-NH-R¹-NCO (II)

mit R¹ gleich oder verschieden sowie repräsentiert durch einen 6 bis 20 Kohlenstoffatome enthaltenden gesättigten oder ungesättigten, verzweigten oder unverzweigten organischen Rest.
Zur Umsetzungen von Komponente S der allgemeinen Formel (II) ist die Anwesenheit von primären- und/oder sekundären Aminogruppen und/oder Alkoholgruppen erforderlich.

### b) Uretdionverbindungen der allgemeinen Formel (III)

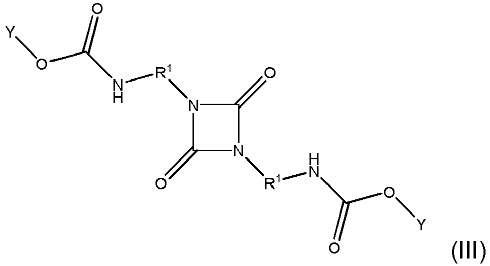

mit R¹ gleich oder verschieden sowie repräsentiert durch einen 6 bis 20 Kohlenstoffatome enthaltenden gesättigten oder ungesättigten, verzweigten oder unverzweigten organischen Rest.
Zur Umsetzungen von Komponente S der allgemeinen Formel (III) ist die Anwesenheit von primären- und/oder sekundären Aminogruppen erforderlich.

### c) Acrylate der allgemeinen Formel (IV)

H₂C=CH-COO-Y (IV)

Zur Umsetzungen von Komponente S der allgemeinen Formel (IV) ist die Anwesenheit von primären- und/oder sekundären Aminogruppen erforderlich.

### d) Säuren gewählt aus der Gruppe der Sulfonsäuren der allgemeinen Formel (VII), Carbonsäuren und Phosphorsäureester.

Bevorzugt sind Carbonsäuren der allgemeinen Formel (V) und Phosphorsäureester der allgemeinen Formel (VI)

(HOOC)ₚ-Y(X¹)ᵣ (V)

(OH)₃₋ᵥPO(O-Y(X¹)ᵣ)ᵥ (VI)

Y-SO₂-OH (VII)

mit p = 1 - 3, r = 1 - 5, X¹ = H oder OH und v = 1 oder 2.

Zur Umsetzungen von Komponente S der allgemeinen Formel (V) ist die Anwesenheit von primären- und/oder sekundären- und/oder tertiären Aminogruppen und/oder Alkoholgruppen erforderlich.

Zur Umsetzungen von Komponente S der allgemeinen Formel (VI) ist die Anwesenheit von primären- und/oder sekundären- und/oder tertiären Aminogruppen erforderlich.

Zur Umsetzungen von Komponente S der allgemeinen Formel (VII) ist die Anwesenheit von primären- und/oder sekundären Aminogruppen erforderlich.

Eine weitere Möglichkeit zum Aufbau der Seitenketten ist die Umsetzung des Polyamins PA oder eines modifizierten Polyamins PA mit Lactonen wie Propiolacton, Valerolacton, Butyrolacton, Caprolacton und/ oder substituierten Lactonen durch Ringöffnungspolymerisation, wie sie beispielsweise weiter unten im Text zur Synthese von monofunktionellen Polyestern beschrieben wird. Es kann ebenfalls ein Gemisch von unterschiedlichen Lactonen eingesetzt werden.

Als modifiziertes Polyamin PA wird hier und im Folgenden ein Polyamin bezeichnet, das aus PA durch eine oder mehrere der Umsetzungen (a), (b) und (c) erhältlich ist und noch reaktive Gruppen enthält, wie primäre und/oder sekundäre Amine und/oder Hydroxylgruppen.

Üblicherweise enthält Y mindestens einen Polyetherrest, Polyesterrest, Kohlenwasserstoffrest und/oder Polysiloxanrest.

Häufig enthält Y insgesamt 1 bis 450 Ethersauerstoffatome, welche bevorzugt in Ethersauerstoffatome aufweisenden Gruppen enthalten sind, die sich ableiten von Polytetrahydrofuran, Polyoxetanen und/oder Polyoxiranen.

Typischerweise enthält Y insgesamt 3 bis 400 Ethersauerstoffatome, wobei mindestens 50, bevorzugt mindestens 80 Mol-% der Ethersauerstoffatome in Ethylenoxid- und/oder Propylenoxidstruktureinheiten vorliegen.

Der im erfindungsgemäßen Verfahren eingesetzte Alkohol Y-OH kann zusätzliche Heteroatome, wie O, S, Si und/oder N, aufweisen, bzw. Ether-, Urethan-, Carbonat-, Amid-, Harnstoff- und/oder Estergruppen enthalten. Gegebenenfalls ist in den Gruppen Y Wasserstoff gegen Halogen (beispielsweise Fluor und/oder Chlor) substituiert. Der Rest Y kann weitere Gruppen, wie C=C-Doppelbindungen, tragen, die sich bei der Bildung des Additionsproduktes inert verhalten. Die gegebenenfalls vorhandenen Ester, Ether, Urethan, Carbonat und/oder Siloxan-Gruppen können in Blockstruktur vorliegen (beispielsweise Poly(ethylenoxidblock-propylenoxydblock-ε-caprolacton), einen Gradienten bilden oder auch statistisch angeordnet sein.

### 1) Zu Ethergruppen bzw. Polyethern, welche in Y enthalten sein können:

Als Y-OH können Monohydroxypolyether eingesetzt werden. Diese können zum Beispiel durch Alkoxylierung von vorstehend als Y-OH beschriebenen Verbindungen, wie Alkanolen, Cycloalkanolen, Phenolen mit Alkylenoxiden wie Ethylenoxid, Propylenoxid, Butylenoxid, Styroloxid, aliphatischen oder aromatischen Glycidethern wie Isopropylglycidether, Butylglycidether, Allyglycidether, 2-Ethylhexylglycidether, Kresylglycidether und Phenylglycidether dargestellt werden. Es können auch Mischungen dieser Rohstoffe eingesetzt werden. Im Falle von gemischten Polyethern können diese statistisch, in Gradientenform oder in Blöcken angeordnet sein. Diese Polyether haben häufig ein zahlenmittleres Molekulargewicht (Mₙ) im Bereich von etwa 100 bis 25000, besonders häufig von 150 bis 15000 und besonders typisch von 200 bis 10000 g/mol. Bevorzugt sind Polyether auf Basis von Ethylenoxid, Propylenoxid und deren Mischungen.

Beispiele sind hydroxyfunktionelle Vinylverbindungen, wie Hydroxybutylvinylether, monohydroxyfunktionelle Polyoxyalkylenmonoalkohole, wie Allylpolyether (z. B. Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG), Vinylpolyether (wie Polyglykol V 500, Polyglykol V 1100 oder Polyglykol V 5500 der Clariant AG), Methanol gestartete Polyoxyethylenmonoalkohole (wie Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG), Alkanol gestartete Polyoxypropylenmonoalkohole (wie z. B. Polyglykol B01 / 20, Polyglykol B01 / 40, Polyglykol B01 / 80, Polyglykol B01 / 120 oder Polyglykol B01 / 240 der Clariant AG oder Pluriol^{®} A 1350 P oder Pluriol^{®} A 2000 P der BASF AG) und mit verschiedenen Fettalkoholen gestarteten Polyalkoxylate mit variablem Alkoxylierungsgrad (unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF AG bekannt). Bevorzugt werden Polyoxyalkylenmonoalkohole verwendet, die Ethylenoxid- und/oder Propylenoxid- und/oder Butylenoxidgruppen enthalten und gegebenenfalls mit Styroloxid modifiziert sind. Besonders bevorzugt ist die Verwendung von Polyoxyalkylenmonoalkoholen (wie Polyglykol B 11/50, Polyglykol B 11/70, Polyglykol B 11/100, Polyglykol B 11/150, Polyglykol B 11/300 oder Polyglykol B 11/700 von der Clariant AG, Pluriol^{®} A 1000 PE, Pluriol^{®} A 1320 PE, oder Pluriol^{®} A 2000 PE der BASF SE oder Terralox WA 110 von DOW Chemicals), bei denen es sich um Butanol gestartete Polyoxyalkylene aus Ethylen- und Propylenoxid mit einer terminalen OH-Gruppe handelt.

### 2) Zu Kohlenwasserstoffresten, welche in Y enthalten sein können:

Die Kohlenwasserstoffreste liegen bevorzugt als Arylrest, als verzweigter oder unverzweigter Alkylarylrest, Aralkylrest und/oder als acyclischer, cyclischer verzweigter oder unverzweigter Alkylrest vor. Es können auch Gemische solcher Verbindungen, d.h. mindestens zwei verschiedene Verbindungen Y-(OH) eingesetzt werden. Die aliphatischen oder araliphatischen Verbindungen Y-(OH) können geradkettig oder verzweigt, gesättigt oder ungesättigt vorliegen. Gesättigte Spezies sind bevorzugt.

Beispiele für Y-OH mit Kohlenwasserstoffresten sind Methanol, Ethanol, Propanol, Isopropanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Alkylnaphthole und Phenylethanol.

Weiterhin können Y-OH Polyolefinmonoole, wie nichthydrierte, teilhydrierte und/ oder vollständig hydrierte Polybutadiene, nichthydrierte, teilhydrierten und/ oder vollständig hydrierte Polyisoprene, Polyisobutylene, Polypropylene oder Ethylen/Butylen-Copolymere sein. Diese Verbindungen sind bekannt. So wird beispielsweise der Zugang zu hydroxyfunktionellem Polyisobutylenen in US 6875897 beschrieben.

### 3) Zu Estergruppen bzw. Polyestern, welche in Y enthalten sein können:

Als Y-OH können auch Monohydroxymonoester und Monohydroxypolyester eingesetzt werden.

Hydroxyfunktionelle Acrylate oder Methacrylate, wie Hydroxyethylacrylat, Hydroxyethylmethacrylat, Hydroxybutyl(meth)acrylat sind Beispiele für geeignete Monohydroxymonoester.

Polyester können z.B. durch Umsetzung von Dicarbonsäuren sowie deren veresterbaren Derivaten, wie Anhydriden, Säurechloriden oder Dialkylestern (wie Dimethylestern oder Diethylestern) durch Umsetzung mit Diolen und mono-, di-, oder trifunktionellen Startkomponenten, hergestellt werden. Die Bildung von Dihydroxypolyestern kann bei Bedarf durch Einsatz entsprechend stöchiometrischer Mengen an Monohydroxyverbindungen zurückgedrängt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie Hydrierungsprodukte. Beispiele für entsprechende Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Bevorzugte Polyester für den Einsatz als Y-OH sind solche, die durch Polykondensation einer oder mehrerer, gegebenenfalls alkylsubstituierter, Hydroxycarbonsäuren und/oder Ringöffnungspolymerisation der korrespondierenden Lactone, wie Propiolacton, Valerolacton, Butyrolacton, Caprolacton und/ oder substituierten Lactonen mittels einer Monohydroxy-Startkomponente (wie in US-A-4 647 647 beschrieben) erhalten werden können. Bevorzugt besitzen diese ein zahlenmittleres Molekulargewicht (Mₙ) von 150 bis 5000 g/mol. Als Startkomponente sind im Prinzip alle anderen als Y-OH aufgeführten Verbindungen einsetzbar. Es können auch jeweils Gemische der vorgenannten Verbindungen eingesetzt werden. Die Lactonpolymerisation wird nach bekannten Verfahren, initiert durch beispielsweise Titanate, p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.

### 4) Zu Polycarbonaten, welche in Y enthalten sein können:

Der Rest Y kann auch Carbonatgruppen enthalten, wie diese durch bekannte Umsetzungen mit offenkettigen und/oder cyclischen Carbonaten erhalten werden. Geeignet sind zum Beispiel mit Carbonaten modifizierte lineare Polyester oder Polycarbonatdiole, wie diese in der Polyurethanherstellung verwendet werden. Beispiele sind beschrieben in der US-4 101 529. Geeignete Carbonate sind z.B. aliphatische, cycloaliphatische, araliphatische und/oder aromatische Kohlensäurester, wie Dialkylcarbonate, z.B. Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

### 5) Zu Polyoxazolinen, welche in Y enthalten sein können:

Als Y-OH können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden durch kationische, ringöffnende Polymerisation von 2-Alkyl-2-oxazolinen oder 2-alkyl-2-oxazinen mit Initiatoren, wie Para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen meist ein zahlenmittleres Molekulargewicht (Mₙ) von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.

### 6) Zu OH-funktionelle Polymeren von ethylenisch ungesättigten Verbindungen, welche in Y enthalten sein können:

Als Y-OH können auch OH-funktionelle Polymere von ethylenisch ungesättigten Monomeren, die keine OH-Funktionen tragen, eingesetzt werden. Die OH-Funktionen können über Initiatoren oder Kettenregler in bekannter Weise eingeführt werden. Solche Verbindungen sind auf diesem Gebiet der Technik bereits zur Herstellung von anderen Dispergiermitteln verwendet worden, wie sie in der US-A-4 032 698 bzw. in der EP 318 999 beschrieben sind. Diese Polyacrylate haben meist ein zahlenmittleres Molekulargewicht (Mₙ) von 300 bis 20000 g/mol, bevorzugt meist von 500 bis 10000 g/mol. Diese können in Blockstruktur oder auch statistisch angeordnet sein oder einen Gradienten bilden.

Beispiele für ethylenisch ungesättigte Monomere sind
Alkyl(meth)acrylate von geradkettigen, verzweigten oder cycloaliphatischen Alkoholen mit 1 bis 22 C-Atomen, wie Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobornyl(meth)acrylat und t-Butyl(meth)acrylat; Aryl(meth)acrylate, wie Benzylmethacrylat oder Phenylacrylat (wobei die Arylreste jeweils unsubstituiert oder bis zu vierfach substituiert sein können), wie 4-Nitrophenylmethacrylat; Mono(meth)acrylate von Ethern, Polyethylenglykolen, Polypropylenglycolen oder gemischten Polyethylen/propylenglycolen mit 5 bis 80 C-Atomen, wie Tetrahydrofurfurylmethacrylat, Methoxyethoxyethylmethacrylat, 1-Butoxypropylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat, Poly(propylenglycol)methylether(meth)acrylat; Aminoalkyl(meth)acrylate, wie N,N-Dimethylaminoethyl(meth)acrylat, 2-Trimethylammoniumethylmethacrylatchlorid und N,N-Dimethylaminopropyl(meth)acrylat; (Meth)acrylate von halogenierten Alkoholen, wie Perfluoralkyl(meth)acrylate mit 6 bis 20 C-Atomen; Styrol und substituierte Styrole, wie 4-Methylstyrol, Methacrylnitril und Acrylnitril;
ethylenisch ungesättigte Heterocyclen, wie zum Beispiel 4-Vinylpyridin und 1-[2-(Methacryloyloxy)-ethyl]-2-imidazolidinon;

Vinylester von Carbonsäuren mit 1 bis 20 C-Atomen, wie Vinylacetat;
Maleinimid, N-Phenylmaleinimid und N-substituierte Maleinimide mit geradkettigen, verzweigten oder cycloaliphatischen Alkylgruppen mit 1 bis 22 C-Atomen, wie N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 C-Atomen, wie N-(t-Butyl)acrylamid und N,N-Dimethylacrylamid;

Bevorzugte nicht OH-funktionelle Monomere sind Alkyl(meth)acrylate, Aryl(meth)acrylate und Styrol.

### 7) Zu Polysiloxanen, welche in Y enthalten sein können:

Als Y-OH können auch monohydroxyfunktionelle Polysiloxane eingesetzt werden. Die Polysiloxane lassen sich mit der nachstehenden allgemeinen Formel beschreiben: 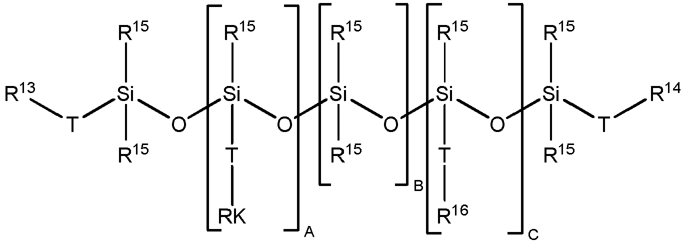 mit
- T: = C₁-C₁₄-Alkylen,
- RK: = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem zahlenmittleren Molekulargewicht (Mₙ) zwischen 130 und 2700 g/mol,
- R¹³ und R¹⁴: jeweils unabhängig repräsentiert durch C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK,
- R¹⁵: = C₁-C₁₄-Alkyl, -Aryl oder -Aralkyl,
- R¹⁶: = polyhydroxyfunktioneller verzweigter Polyglycidol-Polyetherrest, der aus einer verzweigten Polyglycidolgruppe besteht oder diese enthält,
- A: = 0 - 20, bevorzugt 1 - 15, besonders bevorzugt 1 - 8,
- B: = 2 - 300, bevorzugt 10 - 200, besonders bevorzugt 15 - 100 und
- C: = 0 - 20, bevorzugt 1 - 15, besonders bevorzugt 1 - 8,
wobei bei C = 0 gilt, dass R¹⁴ = R¹⁶ und/oder R¹³ = R¹⁶. Wenn die Einheit -[SiR¹⁵(Z-R¹⁶)]-O- vorhanden ist, d. h. C mindestens 1 ist, so ist es möglich, dass R¹³ und R¹⁴ verschieden von R¹⁶ sind.

Die genannten Polysiloxanreste können auch als organomodifizierte Polysiloxanreste vorliegen.

Die Synthese der Isocyanataddukte der allgemeinen Formel (II) erfolgt durch Umsetzung von Y-OH mit einem unterschiedlich reaktive NCO-Gruppen aufweisenden Diisocyanat R¹(NCO)₂, wobei das Diisocyanat R¹(NCO)₂ mindestens im äquimolaren Verhältnis oder im Überschuß gegenüber der Hydroxylkomponente Y-OH eingesetzt wird. Wird das Diisocyanat R¹(NCO)₂ im Überschuß eingesetzt, so muss es nach der Umsetzung entfernt werden. Hierzu eignet sich beispielsweise eine Destillation.

Der Einsatz des unterschiedlich reaktive NCO-Gruppen aufweisenden Diisocyanats R¹(NCO)₂ im molaren Überschuss bewirkt eine höhere Selektivität dahingehend, dass vorzugsweise nur genau eine NCO-Gruppe des Diisocyanats mit Y-OH umgesetzt wird. Je größer der molare Überschuss des Diisocyanats, desto höher ist normalerweise die Selektivität bezüglich der Herstellung des Isocyanataddukts (II). Das aufgrund des Einsatzes im Überschuss anfallende nicht umgesetzte Diisocyanat wird entsprechend wenigstens teilweise (jedoch möglichst vollständig) aus dem Reaktionsgemisch entfernt, da es bei der weiteren Umsetzung mit dem Polyamin PA oder einem modifizierten Polyamin PA zu ungewünscht vernetzten, hochmolekularen Produkten führt. Die Synthese solcher Isocyanataddukte (II) wird beispielsweise in WO 2012/175159 oder in EP 1 048 681 beschrieben.

Die Isocyanataddition kann je nach Reaktivität der einzelnen Reaktionspartner, in dem für diese Art von Reaktion üblichen Temperaturbereich von Raumtemperatur bis etwa 150 °C, bevorzugt bis 100°C, besonders bevorzugt bis 70°C erfolgen. Zur Beschleunigung und Reduzierung von Nebenreaktionen können die bekannten und üblichen Katalysatoren, wie tertiäre Amine, Triethylamin, Dimethylcyclohexylamin, N-Methylmorpholin, N,N'-Dimethylpiperazin, 2-(Dimethylaminoethoxy)ethanol, Diazabicyclo-(2,2,2)octan und ähnliche sowie insbesondere organische Metallverbindungen, wie Titansäureester, Eisenverbindungen wie Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Diisocyanat eingesetzt.

Je nach Viskosität kann die Reaktion in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di-oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen.

Die Uretdionverbindungen der allgemeinen Formel (III) werden durch Reaktion von Y-OH mit uretdiongruppenhaltigen Diisocyanaten wie in EP 1 593 700 beschrieben erhalten.
Uretdionhaltige Diisocyanate sind zum Beispiel in EP 0 795 569 beschrieben. Die Herstellung dieser Uretdiondiisocyanate ist z. B. in DE 1 670 720, EP 45 995, EP 99 976, EP 1 174 428 und der dort zitierten Literatur beschrieben. Bevorzugt sind die uretdionhaltigen Diisocyanate cyclischer Dimerisierungsprodukte von 1,4-Diisocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis(isocyanatomethyl)cyclohexan, 1-Isocyanato-3,3,5-trimethyl-5-isocyanatomethyl-cyclohexan (Isophorondiisocyanat, IPDI), 4,4'-Diisocyanatodicyclohexylmethan, Toluylendiisocyanat (TDI), 1-Isocyanato-1-methyl-4(3)isocyanatomethylcyclohexan, Bisisocyanatomethylnorbornan und 1,3-und 1,4-Bis(2-isocyanatoprop-2-yl)benzol (TMXDI) oder Mischungen solcher Diisocyanate. Ganz besonders bevorzugte uretdionhaltige Diisocyanate sind dabei cyclische Dimerisierungsprodukte von Hexamethylendiisocyanat (HDI), Isophorondiisocyanat (IPDI) und Toluylendiisocyanat (TDI).

Hierbei können die bei der Synthese des Isocyanatadduktes (II) genannten Katalysatoren oder Lösemittel eingesetzt werden respektive es gelten die dort angegeben Temperaturbereiche.

### Verbindungen der allgemeinen Formel (V):

Als Verbindungen der allgemeinen Formel (V) eignen sich zum Beispiel solche Verbindungen, die durch Umsetzung von Dicarbonsäuren sowie deren veresterbaren Derivaten wie beispielsweise Anhydriden, Säurechloriden oder Dialkylestern, wie Dimethylestern oder Diethylestern mit Y-OH oder mit Diolen und monofunktionellen Carbonsäuren hergestellt werden. Die Bildung von Dihydroxypolyestern kann bei Bedarf durch Einsatz entsprechend stöchiometrischer Mengen an monofunktionellen Carbonsäuren zurückgedrängt werden. Die Veresterung kann in Substanz oder auch durch azeotrope Veresterung in Anwesenheit eines Schleppmittels durchgeführt werden. Solche Kondensationsreaktionen werden beispielsweise bei Temperaturen von etwa 50 °C bis 250 °C durchgeführt.

Beispiele für entsprechend einsetzbare Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere sowie deren Hydrierungsprodukte.

Beispiele für entsprechend brauchbare Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Entsprechend als Startkomponente verwendete Monocarbonsäuren besitzen vorzugsweise 1 bis 42, insbesondere 4 bis 18, bevorzugt 8 bis 14 Kohlenstoffatome und können gesättigt oder ungesättigt, aliphatisch oder aromatisch, linear, verzweigt und/oder cyclisch sein.

Beispiele für entsprechend geeignete Monocarbonsäuren sind Stearinsäure, Isostearinsäure, Ölsäure, Laurinsäure und Benzoesäure. Weitere geeignete Säuren sind die auch als Koch-Säuren bezeichneten tertiären gesättigten Monocarbonsäuren wie 2,2-Dimethylpropansäure, 2,2-Dimethylbutansäure, 2,2-Dimethylpentansäure, tert-Nonansäure sowie Neodecansäure. Als Handelsprodukte sind derartige Koch-Säuren z.B. auch unter den Bezeichnungen Versatic®-Säuren (Momentive), Neosäuren (Exxon) oder CeKanoic Säuren (Kuhlmann) bekannt. Geeignete Beispiele sind die Versatic®-Säuren 5,6, 9,10, 913,1019 der Firma Momentive.

Meist liegt die Verbindung der allgemeinen Formel (V) in Form von Polyesterverbindungen vor, die jeweils mindestens 5, bevorzugt jeweils 6 bis 70, Estergruppen aufweisen.
Estergruppen verbessern typischerweise die Löslichkeit.

Gemäß speziellen Ausführungsformen der Erfindung weisen die Verbindungen der Formel (V) auch Ethergruppen auf.

Bevorzugt weisen die Verbindungen der Formel (V) jeweils genau eine Carboxylgruppe auf, wobei die Verbindungen der Formel (V) vorzugsweise jeweils keine weiteren funktionellen Gruppen enthalten, die bei der Umsetzung mit dem Polyamin PA oder einem modifizierten Polyamin PA reagieren.

Häufig liegen mindestens 50 Gew.-%, bevorzugt 70 bis 100 Gew.%, der eingesetzten Verbindungen der Formel (V) in Form von linearen, monocarboxyfunktionellen Polyestern vor, welche bevorzugt jeweils ein zahlenmittleres Molekulargewicht (Mₙ) von 500 bis 10.000, bevorzugt von 800 bis 8.000 aufweisen.

Zahlenmittlere Molekulargewichte (Mₙ) kleiner 500 sowie größer 10000 verschlechtern häufig die universelle Verträglichkeit.

Besonders geeignete Polyester sind solche, die durch Polykondensation einer oder mehrerer, gegebenenfalls alkylsubstituierter, Hydroxycarbonsäuren wie Ricinolsäure oder 12-Hydroxystearinsäure und/oder Ringöffnungspolymerisation der korrespondierenden Lactone, wie Propiolacton, Valerolacton, Caprolacton in Gegenwart von Monocarbonsäuren erhalten werden können. Die Lactonpolymerisation wird nach bekannten Verfahren, initiert durch beispielsweise p-Toluolsulfonsäure oder Dibutylzinndilaurat, bei Temperaturen von etwa 50 °C bis 200 °C durchgeführt. Besonders bevorzugt sind Polyester auf ε-Caprolacton-Basis, gegebenenfalls in Kombination mit δ-Valerolacton.

### Verbindungen der allgemeinen Formel (VI):

Bei den Verbindungen der allgemeinen Formel (VI) handelt es sich um Phosphorsäureester. Diese Verbindungen werden zweckmäßig hergestellt durch die Umsetzung von mindestens einer Hydroxylgruppe, bevorzugt genau einer Hydroxylgruppe von Y-OH mit einer esterbildenden Phosphorverbindung. Bevorzugt weisen die Verbindungen der Formel (VI) jeweils genau eine Phosphatgruppe auf, wobei die Verbindungen der Formel (VI) vorzugsweise jeweils keine weiteren funktionellen Gruppen enthalten, die bei der Umsetzung mit dem Polyamin PA oder einem modifizierten Polyamin PA mit Amingruppen und/oder Hydroxylgruppen reagieren.

Unter einer esterbildenden Phosphorverbindung wird eine Verbindung verstanden, die durch Umsetzung mit einer Hydroxylgruppen enthaltenden Verbindung Phosphorsäureester bilden kann. Als esterbildende Phosphorverbindungen können beispielsweise Polyphosphorsäure, Phosphorpentoxid, Phosphoroxychlorid und Acetylphosphat eingesetzt werden. Bevorzugt werden Polyphosphorsäure oder Phosphorpentoxid eingesetzt, besonders bevorzugt Polyphosphorsäure. Mit Polyphosphorsäure entstehen überwiegend Monoester und mit Phosphorpentoxid Mono/Diester-Gemische. Die Monoester sind bevorzugt. Es ist auch möglich, dass bei der Phosphorylierungsreaktion ein Gemisch verschiedener zu phosphorylierender Komponenten eingesetzt wird.

Die Reaktion der esterbildenden Phosphorverbindungen mit den Hydroxylverbindungen Y-OH erfolgt vorzugsweise ohne Lösungsmittel bei Temperaturen bis 150 °C, bevorzugt unter 100 °C. Die Reaktion kann aber auch in Gegenwart von geeigneten inerten Lösungsmitteln durchgeführt werden (beispielsweise Methoxypropylacetat).

Monofunktionalität bei den Verbindungen der Formel (V) und (VI) ist gewünscht, um Vernetzung zu vermeiden, welche meist zur verschlechterten Löslichkeit, schlechteren Verträglichkeit, zu hohen Viskositäten bzw. zu geringer Verträglichkeit führt.

Die Reaktion des Polyamins PA oder eines modifizierten Polyamins PA mit dem Isocyanataddukt (II) erfolgt unter den für die Herstellung der Verbindungen (II) und (III) genannten Bedingungen. Das molare Verhältnis der Isocyanatgruppen der Verbindung (II) zu den reaktiven Gruppen des Polyamins PA oder eines modifizierten Polyamins PA liegt im Bereich von 0,1 zu 1 bis 1 zu 1. Zu den reaktiven Gruppen des Polyamins PA oder eines modifizierten Polyamins PA zählen bei dieser Reaktion primäre und sekundäre Aminogruppen sowie Alkoholgruppen.

Für die Reaktion des Polyamins PA oder eines modifizierten Polyamins PA mit dem Uretdion (III) gelten die für die Herstellung der Verbindungen (II) und (III) genannten Bedingungen. Wobei bei der bevorzugten Reaktionsführung kein Katalysator eingesetzt wird und der Temperaturbereich zwischen Raumtemperatur und 100°C liegt. Das molare Verhältnis der Uretdiongruppen der Verbindung (III) zu den reaktiven Gruppen des Polyamins PA oder eines modifizierten Polyamins PA liegt im Bereich von 0,1 zu 1 bis 1 zu 1. Zu den reaktiven Gruppen des Polyamins PA oder eines modifizierten Polyamins PA zählen bei dieser Reaktion primäre und sekundäre Aminogruppen sowie Alkoholgruppen.

Die Michaeladdition der Acrylate (IV) erfolgt in einem Temperaturbereich von Raumtemperatur bis 150 °C, bevorzugt bis 100 °C, besonders bevorzugt bis 70 °C in Gegenwart eines Lösemittels oder in Substanz.
Das molare Verhältnis der Acrylatgruppen der Verbindung (IV) zu den reaktiven Gruppen des Polyamins PA oder eines modifizierten Polyamins PA ist bevorzugt von 0,1 zu 1 bis 1 zu 1. Als reaktive Gruppen des Polyamins PA oder eines modifizierten Polyamins PA gelten bei dieser Reaktion primäre und sekundäre Aminogruppen.

### Umsetzungen mit Verbindungen der allgemeinen Formeln (V), (VI) und (VII):

Die Umsetzung der Verbindungen der allgemeinen Formeln (V), (VI) und (VII) mit Polyamin PA oder einem modifizierten Polyamin PA erfolgt in einem Temperaturbereich von Raumtemperatur bis 200 °C, bevorzugt bis 150 °C, besonders bevorzugt bis 120 °C in Gegenwart eines Lösemittels oder in Substanz.

Bei der Umsetzung der Polyamine PA oder der modifizierten Polyamine PA mit den Verbindungen der Formel (V) ist je nach Reaktionsführung Salzbildung und/oder Amidbildung möglich. Die Salzbildung erfolgt unter milden Reaktionsbedingungen zwischen den Säuregruppen in den Verbindungen der Formel (V) und den Stickstoffatomen der primären, sekundären und tertiären Aminogruppen der Polyamine. Die Amidbildung ist nur bei primären und sekundären Aminogruppen möglich und erfolgt unter Wasserabspaltung bei heftigeren Reaktionsbedingungen wie höheren Temperaturen und /oder längeren Reaktionszeiten als bei der Salzbildung.

Für die Salzbildung werden Temperaturen unter 150 °C benötigt, häufig werden Temperaturen von 120 °C verwendet und bevorzugt ist die Umsetzung bei Temperaturen kleiner 100 °C. Die Amidbildung hingegen verläuft unter Abspaltung von Wasser und bei Temperaturen von mindestens 100 °C, häufig von 150 °C oder sogar bei Temperaturen von bis zu 200 °C. Bei diesen Umsetzungen können auch Gemische von Versalzungsprodukten und Amiden entstehen.

Die Umsetzung der Polyamine PA oder der modifizierten Polyamine PA mit den Verbindungen der Formeln (VI) und (VII) erfolgt unter Salzbildung.

Zweckmäßig wird die Umsetzung in Gewichtsverhältnissen von Polyamin zu den Verbindungen der Formeln (V), (VI) und (VII) von 1 zu 500 bis 1 zu 1, bevorzugt 1 zu 200 bis 1 zu 5 und besonders bevorzugt 1 zu 100 bis 10 zu 1, durchgeführt. Ein niedriger Anteil des Polyamins bewirkt häufig eine geringe Adsorption an Feststoffoberflächen, wobei ein hoher Anteil des Polyamins oft schlechte Löslichkeit und schwierige Handhabbarkeit bedeuten kann.

Die unter (b) beschriebene Lactonpolymerisation in Gegenwart des Polyamins PA oder eines modifizierten Polyamins PA erfolgt unter den für die Herstellung der Polyester Y-OH genannten Bedingungen katalysiert durch beispielsweise p-Toluolsulfonsäure oder Dibutylzinndilaurat, bei Temperaturen von etwa 50 °C bis 200 °C. Besonders bevorzugt sind Polyester auf ε-Caprolacton-Basis, gegebenenfalls in Kombination mit δ-Valerolacton.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden. Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen mittels Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden oder auf inerte Träger aufgezogen werden. Für Anwendungen, bei denen die Verwendung von Feststoffen bevorzugt ist, wie Pulverlacke oder bestimmte Kunststoffverarbeitungsverfahren, können die Verbindungen auch durch weitere bekannte Verfahren in eine feste Form überführt werden. Beispiele für solche Verfahren sind Mikroverkapselung, Sprühtrocknung, Adsorption auf einen festen Träger wie SiO₂ oder das PGSS-Verfahren (Particle from Gas Saturated Solutions).

Die erfindungsgemäßen Polymere können teilweise oder vollständige mit Säuren versalzt werden.
Beispiele für Säuren sind Carbonsäuren, Phosphorsäure, Phosphorsäureester von Polyether, Polyestern oder Polyetherpolyesterblockcopolymeren und Sulfonsäuren.

Weiterhin lassen sich die tertiären Amine der erfindungsgemäßen Verbindungen in Alkylierungsreaktionen mit Alkylhalogeniden, wie mit Benzylchlorid, Methyliodid, oder mit Oxiranen, wie Alkylenoxide oder Glycidether, in Gegenwart von Säuren, wie Carbonsäuren oder Phosphorsäuren und deren Estern, in entsprechende quartäre Ammoniumsalze überführen.

Die in den erfindungsgemäßen Polymeren gegebenenfalls vorhandenen Hydroxygruppen können mit esterbildenden Phosphorverbindungen wie zum Beispiel Polyphosphorsäure zu Phosphorsäureestern weiter umgesetzt werden.

Die tertiären Amine können mit Sauerstoff, Peroxoverbindungen wie Percarbonsäuren und mit Wasserstoffperoxid in Aminoxide überführt werden, die zusätzlich mit Säuren wie zum Beispiel Salzsäure versalzt werden können.

Die Erfindung betrifft auch eine Dispersion, welche ein Dispergiermedium sowie dispergierten partikulären Feststoff enthält, der bevorzugt in Form eines anorganischen Füllstoffs, und/oder in Form eines anorganischen oder organischen Pigments und/oder in Form von Kohlenstoff-Nanoröhren und/oder in Form von Graphenen, vorliegt, wobei bezogen auf das Gesamtgewicht der Dispersion 0,1-10 Gew.-%, bevorzugt 0,3 bis 4,5 Gew.-%, des erfindungsgemäßen Polymers PAS als Netz- und Dispergiermittel eingesetzt wird.

Bevorzugt liegt die erfindungsgemäße Dispersion als Tinte oder Beschichtungsmittel, insbesondere als Lack, vor.

Die Erfindung betrifft weiterhin auch eine Partikelzubereitung enthaltend 30,0 bis 99,9 Gew.% partikulären Feststoff sowie 0,1 - 70,0 Gew.% des erfindungsgemäßen Polymers PAS.

Schließlich betrifft die Erfindung die Verwendung des erfindungsgemäßen Polymers PAS als Netz- und Dispergiermittel.

Das erfindungsgemäße Polymer PAS wird insbesondere in bekannten Einsatzgebieten von Dispergiermitteln verwendet, z. B. bei der Herstellung oder Verarbeitung von Lacken, von Druckfarben, von Papierstrich, von Leder- und Textilfarben, von Pasten, von Pigmentkonzentraten, von Keramiken oder von kosmetischen Zubereitungen und zwar insbesondere dann, wenn diese Produkte Feststoffe, wie Pigmente und/oder Füllstoffe, enthalten.

Auch bei der Herstellung oder Verarbeitung von Gieß- und/oder Formmassen auf Basis von synthetischen, halbsynthetischen oder natürlichen makromolekularen Stoffen, wie Polyvinylchlorid, gesättigten oder ungesättigten Polyestern, Polyurethanen, Polystyrol, Polyacrylat, Polyamid, Epoxidharzen, Polyolefinen, wie Polyethylen oder Polypropylen, kann das erfindungsgemäße Polymer PAS eingesetzt werden. Beispielsweise lassen sich entsprechende Polymere verwenden zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken. Beispiele für übliche Bindemittel sind Harze auf Basis von Polyurethan, Cellulosenitrat, Celluloseacetobutyrat, Alkyd, Melamin, Polyester, Chlorkautschuk, Epoxid und Acrylat. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Polymere PAS eignen sich insbesondere auch als Dispergiermittel zur Herstellung von Feststoffkonzentraten, wie Pigmentkonzentraten. Dazu werden beispielsweise die Polymere PAS in einem Trägermedium, wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Polymeren PAS ist es aber insbesondere möglich, stabile bindemittelfreie Pigmentkonzentrate herzustellen. Ebenso ist es möglich, mit den Polymeren fließfähige Feststoffkonzentrate aus Pigmentpresskuchen herzustellen. Hierbei werden dem Presskuchen, der noch organische Lösemittel, Weichmacher und/oder Wasser enthalten kann, die erfindungsgemäßen Polymere zugemischt und die so erhaltene Mischung dispergiert. Die auf verschiedenen Wegen hergestellten Feststoffkonzentrate können dann in unterschiedliche Substrate wie z. B. Alkydharze, Polyesterharze, Acrylatharze, Polyurethanharze oder Epoxidharze eingearbeitet werden. Pigmente können aber auch lösemittelfrei direkt in den erfindungsgemäßen Polymeren PAS dispergiert werden und eignen sich dann besonders zur Pigmentierung von thermoplastischen und duroplastischen Kunststoffformulierungen.

Die erfindungsgemäßen Polymere PAS können vorteilhaft auch bei der Herstellung von Tinten für "non impact"-Druckverfahren wie "thermal inkjet" und dem "Bubblejet-Verfahren" verwendet werden. Diese Tinten können beispielsweise wässrige Tintenformulierungen, lösemittelbasierte Tintenformulierungen, lösemittelfreie oder - arme Tinten für UV-Applikationen als auch wachsartige Tinten sein.

Die erfindungsgemäßen Polymere PAS können vorteilhaft auch bei der Herstellung von Farbfiltern für Flüssigkristallanzeigen, -bildschirme, Farbauflösungsgeräte, Sensoren, Plasmabildschirme, Anzeigen auf Basis der SED (Surface conduction Electron emitter Display) und für MLCC (Multi Layer Ceramic Compounds) verwendet werden. Hierbei kann der flüssige Farbfilterlack, der auch Color Resist genannt wird, durch verschiedenste Applikationsverfahren wie Spin Coating, Aufrakeln, Kombination beider oder über "non impact"-Druckverfahren wie zum Beispiel Inkjet-Verfahren aufgetragen werden. Die MLCC-Technologie wird bei der Herstellung von Mikrochips und Leiterplatten verwendet.

Die erfindungsgemäßen Polymere PAS können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen, Lösungen, Gele, Cremes, Lotionen oder Sprays, vorliegen. Die erfindungsgemäßen Polymere können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, z.B. organische und anorganische Pigmente, wie Titandioxid oder Eisenoxid, enthalten.

Ein derartiges Dispergiermittel kann schließlich auch zur Herstellung eines pigmentierten Überzuges auf einem Substrat verwendet werden, wobei der Pigmentlack auf das Substrat aufgebracht wird und wobei der auf das Substrat aufgebrachte Pigmentlack eingebrannt oder ausgehärtet bzw. vernetzt wird.

Die erfindungsgemäßen Polymere PAS können alleine oder zusammen mit üblichen Bindemitteln eingesetzt werden. Beim Einsatz in Polyolefinen kann es z. B. vorteilhaft sein, entsprechende niedermolekulare Polyolefine als Trägermaterialien zusammen mit PAS einzusetzen.

Eine mögliche Verwendung der erfindungsgemäßen Polymer PAS besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit PAS beschichtet sind. Derartige Beschichtungen von organischen wie auch anorganischen Feststoffen werden in bekannter Weise ausgeführt. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz von PAS zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke gegenüber nicht behandelten Pigmenten aus.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments", 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadatmolybdatgelb oder Chromtitangelb). Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente sein. Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sog. Hybrid-Partikel handeln, die aus einem anorganischen Kern und einer organischen Hülle - oder umgekehrt - bestehen.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas, Polyvinylidenfluorid (PVDF) oder Kohlenstoff. Weitere Beispiele für Pigmente oder Füllstoffe finden sich beispielsweise in der EP-A-0 270 126. Auch Flammschutzmittel wie z. B. Aluminium- oder Magnesiumhydroxid und Mattierungsmittel wie z. B. Kieselsäuren lassen sich ebenfalls gut dispergieren und stabilisieren.

Im Übrigen kann das erfindungsgemäße Polymer PAS auch als Emulgator, Phasenvermittler (Verträglichkeitsvermittler flüssig/flüssig) oder Haftvermittler eingesetzt werden.

Nachstehend soll die Erfindung anhand von Ausführungsbeispielen näher erläutert werden.

### Ausführungsbeispiele:

Im Folgenden wird die Erfindung anhand von Beispielen veranschaulicht. Sofern nicht anders ausgeführt handelt es sich bei den Angaben in Teilen um Gewichtsteile und bei Angaben in Prozent um Gewichtsprozente.

### Meßverfahren:

Bei molekular uneinheitlichen Substanzen stellen die angegebenen Molekulargewichte - im Folgenden wie schon in der vorstehenden Beschreibung - Durchschnittswerte des Zahlenmittels dar. Die Molekulargewichte beziehungsweise zahlenmittleren Molekulargewichte (Mₙ) werden bei Vorhandensein bestimmbarer funktioneller Endgruppen wie Hydroxy-, NCO-, Amino- oder Säuregruppen durch Endgruppenbestimmung über die Ermittlung von OH-Zahl, NCO-Zahl, Aminzahl bzw. Säurezahl durch Titration ermittelt. Bei Verbindungen auf die eine Endgruppenbestimmung nicht anwendbar ist, wird das zahlenmittlere Molekulargewicht mittels Gelpermeationschromotographie gegen einen Polystyrolstandard bestimmt.

### Festkörper

Die Probe (2,0 ± 0,1 g Prüfsubstanz) wird in eine vorher getrocknete Aluminiumschale eingewogen und 10 Minuten bei 150 °C im Trockenschrank getrocknet, im Exsikkator abgekühlt, und dann zurückgewogen. Der Rückstand entspricht dem Festkörperanteil.

### OH-Zahl

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und mit ethanolischer KOH zurücktitriert. Die OH-Zahl gibt die Menge KOH in mg an, die der bei der Acetylierung von 1 g Substanz gebundenen Menge Essigsäure äquivalent ist.

### Säurezahl

Unter der Säurezahl (SZ) wird die Menge KOH in mg verstanden, die zur Neutralisation von 1 g Substanz unter den festgelegten Bedingungen erforderlich ist. Die Säurezahl wird nach DIN EN ISO 2114 durch eine Neutralisationsreaktion mit 0,1 n KOH in Ethanol als Titrationsmittel bestimmt:

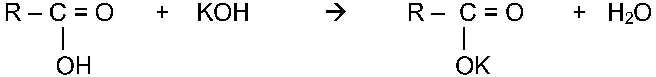

### Aminzahl

Unter der Aminzahl (AZ) wird die Menge KOH in mg verstanden, die dem Aminanteil von 1g Substanz entspricht. Die Aminzahl wird nach DIN 16945 durch eine Neutralisationsreaktion mit 0,1 n Perchlorsäure in Essigsäure als Titationsmittel bestimmt:

R - NH₂ + HClO₄ → R - NH₃⁺ + ClO₄⁻

Die Zugaben inerter Lösemittel, wie Cyclohexan, Dioxan, Chlorbenzol, Aceton, Methylethylketon können die Titration sehr schwacher Basen verbessern.

### NCO-Zahl

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5, 1977.

### Gelpermeationschromatographie (GPC)

Die Gelpermeationschromatographie wurde bei 40 °C mit einer Hochdruckflüssigkeitschromatographie-Pumpe (Bischoff HPLC 2200) und einem Brechungsindexdetektor (Waters 419) durchgeführt. Als Elutionsmittel wurde Tetrahydrofuran mit einer Elutionsgeschwindigkeit von 1 mL/min verwendet. Die Kalibrierung wurde mittels Polystyrol-Standards durchgeführt. Das zahlenmittlere Molekulargewicht (Mₙ), das gewichtsmittlere Molekulargewicht (M_{w}) und der Polymolekularitätsindex PMI = M_{w}/Mₙ wurden mit dem Programm NTeqGPC berechnet.

### Synthesen:

### Allgemeine Herstellvorschriften der Polyamine PA nach Möglichkeit 1:

### Allgemeine Herstellvorschrift (Möglichkeit 1, Verfahren a):

In einem mit Wasserabscheider, Rührer, Thermometer und Stickstoffeinleitungsrohr versehenen Vierhalskolben wird die angegebene Menge Amin A vorgelegt. Mit Wasserbadkühlung wird unter Rühren die angegebene Menge Wasser zudosiert, so dass die Temperatur 80 °C nicht übersteigt. Nach Abkühlen auf Raumtemperatur wird die angegebene Menge Acrylat zudosiert, so dass die Temperatur 50 °C nicht übersteigt. Gegebenenfalls wird das Reaktionsgefäß mit einem Wasserbad gekühlt. Die Reaktionskontrolle erfolgt via 1 H-NMR. Sind alle Doppelbindungen umgesetzt, wird die Temperatur auf 80 °C erhöht und das Reaktionsgemisch für ungefähr drei Stunden bei 80 °C gerührt. Anschließend werden der entstandene Alkohol und das als Lösemittel eingesetzte Wasser bei 80 °C und 20 mbar entfernt. Hierbei entsteht noch mehr Alkohol, welcher entfernt wird. Die Reaktionskontrolle erfolgt via IR-Spektroskopie. Sobald das IR-Spektrum die vollständige Umsetzung der Ester zeigt, gilt die Reaktion als beendet.

### Allgemeine Herstellvorschrift (Möglichkeit 1, Verfahren b):

In einem mit Wasserabscheider, Rührer, Thermometer und Stickstoffeinleitungsrohr versehenen Vierhalskolben wird die angegebene Menge Amin A vorgelegt. Unter Rühren wird die angegebene Menge Ethanol zugegeben, wobei die Temperatur etwas ansteigt. Nach Abkühlen auf Raumtemperatur wird die angegebene Menge Acrylat zudosiert, so dass die Temperatur 50 °C nicht übersteigt. Gegebenenfalls wird das Reaktionsgefäß mit einem Wasserbad gekühlt. Die Reaktionskontrolle erfolgt via 1H-NMR. Sind alle Doppelbindungen umgesetzt, wird die Temperatur auf 80 °C erhöht und das Reaktionsgemisch ungefähr drei Stunden bei 80 °C und 500 mbar gerührt. Anschließend wird die Temperatur sukzessive auf 145 °C erhöht und der Druck auf 300 mbar verringert. Das als Lösemittel verwendete Ethanol und der gebildete Alkohol werden dabei aus dem Reaktionsgemisch entfernt. Die Reaktionskontrolle erfolgt via IR-Spektroskopie. Sobald das IR-Spektrum die vollständige Umsetzung der Ester zeigt, gilt die Reaktion als beendet.

### Allgemeine Herstellvorschrift (Möglichkeit 1, Verfahren c):

In einem mit Wasserabscheider, Rührer, Thermometer und Stickstoffeinleitungsrohr versehenen Vierhalskolben wird die angegebene Menge Amin A vorgelegt. Unter Rühren wird die angegebene Menge Acrylat zudosiert, so dass die Temperatur 50 °C nicht übersteigt. Gegebenenfalls wird das Reaktionsgefäß mit einem Wasserbad gekühlt. Die Reaktionskontrolle erfolgt via 1H-NMR. Sind alle Doppelbindungen umgesetzt, wird die Temperatur auf 100 °C erhöht und das Reaktionsgemisch für ungefähr zwei Stunden bei 100 °C gerührt. Anschließend wird die Temperatur auf 130 °C erhöht und der Druck auf 300 mbar verringert. Der gebildete Alkohol wird dabei aus dem Reaktionsgemisch entfernt. Die Reaktionskontrolle erfolgt via IR-Spektroskopie. Sobald das IR-Spektrum die vollständige Umsetzung der Ester zeigt, gilt die Reaktion als beendet.

### Möglichkeit 1 - Herstellungsbeispiel PA23*:

### Schritt 1:

In einem mit Wasserabscheider, Rührer, Thermometer und Stickstoffeinleitungsrohr versehenen Vierhalskolben werden 44,1 Teile Diethanolamin (Amin A) mit 15,9 Teilen Ethanol vorgelegt und homogenisiert. Anschießend werden 40,0 Teile Ethylacrylat zudosiert, so dass die Temperatur 35 - 40 °C beträgt. Die Reaktionskontrolle erfolgt via 1H-NMR. Sind alle Doppelbindungen umgesetzt, wir das Ethanol bei 60 °C und einer sukzessiven Verringerung des Drucks von 500 mbar auf 200 mbar aus dem Reaktionsgemisch entfernt. Dieser "CGₕ-Baustein" kann unmittelbar nach der Herstellung polykondensiert werden oder auch für eine spätere Verwendung gelagert werden.

### Schritt 2:

In einem mit Wasserabscheider, Rührer, Thermometer und Stickstoffeinleitungsrohr versehenen Vierhalskolben werden 6,71 g 1,1,1-Trimethylolpropan vorgelegt und unter Rühren auf 135 °C erwärmt. Über einen Tropftrichter werden 31,57 g des **CGₕ**-Bausteins zusammen mit 0,039 g Tetrabutyltitanat tropfenweise zugegeben und das entstehende Ethanol abdestilliert. Wenn keine weitere Ethanolbildung beobachtet werden kann, werden weitere 73,68g des **CGₕ**-Bausteins zusammen mit 0,074 g Tetrabutyltitanat zugegeben. Das Reaktionsgemisch wird auf 140 °C erwärmt und gerührt bis keine weitere Ethanolbildung beobachtet werden kann. Wenn keine weitere Ethanolbildung beobachtet werden kann, gilt die Reaktion als beendet.
* Nicht in Tabelle 1 aufgeführt.

**Tabelle 1 - Herstellungsbeispiele Polyamine PA (Möglichkeit 1)**

| Nr. | Acrylat | Gew.-% | Amin A | Gew.-% | Mol. Verhältis Acrylat/Amin | Lösemittel | Gew.-% | Verfahren |
|---|---|---|---|---|---|---|---|---|
| PA1 | Ethylacrylat | 36,1 | Diethylentriamin | 44,7 | 5 / 6 | H₂O | 19,2 | a |
| PA2 | Ethylacrylat | 38,9 | Diethylentriamin | 43,2 | 13 / 14 | EtOH | 17,9 | b |
| PA3 | Ethylacrylat | 44,7 | Diethylentriamin | 55,3 | 5 / 6 | - | - | c |
| PA4 | Ethylacrylat | 35,2 | Diethylentriamin | 45,4 | 4 / 5 | H₂O | 19,4 | a |
| PA5 | Ethylacrylat | 32,6 | Hexamethylendiamin | 47,2 | 4 / 5 | H₂O | 20,2 | a |
| PA6 | Ethylacrylat | 37,1 | Hexamethylendiamin | 44,0 | 49 / 50 | H₂O | 18,9 | a |
| PA7 | Ethylacrylat | 28,5 | Triethylentetramin | 50,0 | 5 / 6 | H₂O | 21,5 | a |
| PA8 | Ethylacrylat | 30,5 | Triethylentetramin | 53,4 | 5 / 6 | H₂O | 16,1 | a |
| PA9 | Ethylacrylat | 26,3 | Tetraethylenpentamin | 59,7 | 5 / 6 | H₂O | 14,0 | a |
| PA10 | Ethylacrylat | 21,9 | Jeffamin D 230 | 54,7 | 24 / 25 | H₂O | 23,4 | a |
| PA11 | Ethylacrylat | 26,8 | Isophorondiamin | 54,9 | 5 / 6 | H₂O | 18,3 | a |
| PA12 | Ethylacrylat | 11,6 | Priamin 1074 | 76,8 | 5 / 6 | H₂O | 11,6 | a |
| PA13 | Ethylacrylat | 30,8 | Jeffamin EDR 148 | 55,4 | 5 / 6 | H₂O | 13,8 | a |
| PA14 | Ethylacrylat | 36,0 | 1,3-Xylylendiamin | 51,0 | 24 / 25 | H₂O | 13,0 | a |
| PA15 | Ethylacrylat | 28,3 | Diethylentriamin | 36,4 | 4 / 5 | EtOH | 35,3 | b |
| PA16 | Ethylacrylat | 33,5 | Diethylentriamin | 41,0 | 5 / 6 | EtOH | 25,5 | b |
| PA17 | Ethylacrylat | 38,8 | Diethylentriamin | 42,8 | 14 / 15 | H₂O | 18,4 | a |
| PA18 | Ethylacrylat | 41,6 | Diethylentriamin | 43,8 | 49 / 50 | H₂O | 14,6 | a |
| PA19 | Methylacrylat | 41,0 | Diethylentriamin | 59,0 | 5 / 6 | - | - | c |
| PA20 | Ethylacrylat | 27,8 | Tetraethylenpentamin | 57,8 | 14 / 15 | H₂O | 14,4 | a |
| PA21 | Ethylacrylat | 39,7 | Diethylentriamin | 42,6 | 27 / 28 | EtOH | 17,7 | b |
| PA22 | Ethylacrylat | 45,0 | Diethylentriamin | 37,0 | 5 / 4 | EtOH | 18,0 | b |

Die Herstellung der uretdionhaltigen Intermedios der allgemeinen Formel (III) (= Produkte der Umsetzung zwischen uretdionhaltigen Polyisocyanten und Verbindungen der Formel Y-OH) erfolgt wie zum Beispiel in DE 10 2004 022 753 beschrieben.

### Herstellung der Uretdionverbindungen der allgemeinen Formel (III):

Die Herstellung der hydroxyfunktionellen Lactonpolyester erfolgt wie zum Beispiel in EP 158678 beschrieben.

### Herstellung des Polyester 1 (OH-Zahl: 47 mg KOH/g):

In einem mit Rückflusskühler, Rührer, Thermometer und Stickstoffeinleitungsrohr versehenen Vierhalskolben werden 20,3 Teile Hexadecanol und 79,7 Teile ε-caprolacton homogenisiert, mit 200 ppm Dibutylzinndilaurat versetzt und auf 170 °C erwärmt. Bei dieser Temperatur wird gerührt, bis ein Festkörpergehalt von > 97 % erreicht ist. Der erhaltene Polyester hat eine OH-Zahl von 47 mg KOH/g.

Die Herstellung der Polyester 2-6 erfolgt wie unter Herstellung des Polyester 1 beschrieben. Die hergestellten Polyester sind in der folgenden Tabelle aufgelistet.

**Tabelle 2 - Polyester**

| Polyester | Alkohol | Gew.-% | ε-Caprolacton Gew.-% | δ-Valerolacton Gew.-% | OH-Zahl mg KOH/g |
|---|---|---|---|---|---|
| 1 | n-Hexadecanol | 20,3 | 79,7 | - | 47 |
| 2 | MPEG 350 | 48,4 | 51,6 | - | 78 |
| 3 | n-Decanol | 14,4 | 85,6 | - | 51 |
| 4 | MPEG 500 | 57,1 | 42,9 | - | 64 |
| 5 | n-Decanol | 19,5 | 80,5 | - | 69 |
| 6 | n-Decanol | 8,2 | 71,1 | 20,7 | 29 |

| | | | | | |
|---|---|---|---|---|---|
| MPEG 350 = Methoxypolyethylenglykol, OH-Zahl: 348 mg KOH/g MPEG 500 = Methoxypolyethylenglykol, OH-Zahl: 112 mg KOH/g | | | | | |

### Allgemeine Herstellvorschrift der Uretdion-Intermedios der allgemeinen Formel (III):

In einem mit Rückflusskühler, Rührer, Thermometer und Stickstoffeinleitungsrohr versehenen Vierhalskolben wird die angegebene Menge Polyisocyanat mit den für das jeweilige Intermedio angegebenen Mengen der angegebenen Komponenten gemischt. Dann wird auf 80 °C erwärmt, 200 ppm Dibutylzinndilaurat zugegeben und bei 80 °C gerührt, bis der NCO-Gehalt auf ≤ 0,1 % gesunken ist.

**Tabelle 3 - Uretdion-Intermedios der allgemeinen Formel (III)**

| Nr. | Polyisocyanat | Gew.-% | Komponente 1 | Gew.-% | Komponente 2 | Gew.-% | Komponente 3 | Gew.-% | NCO-Umsatz in % |
|---|---|---|---|---|---|---|---|---|---|
| I1 | HDI-U | 22,2 | Polyester 1 | 45,3 | Polyether 1 | 23,4 | n-Decanol | 9,1 | 33/17/50 |
| I2 | HDI-U | 20,3 | Polyester 2 | 15,1 | Polyether 2 | 64,6 | - | - | 20/80/- |
| I3 | HDI-U | 26,9 | Polyester 2 | 10,1 | Polyether 3 | 63,0 | - | - | 10/90/- |
| I4 | HDI-U | 20,0 | - | - | Polyether 2 | 80,0 | - | - | -/100/- |
| I5 | HDI-U | 14,9 | Polyester 2 | 11,1 | Polyether 1 | 74,0 | - | - | 20/80/- |
| I6 | HDI-U | 11,3 | Polyester 2 | 8,5 | Polyether 4 | 80,2 | - | - | 20/80/- |
| I7 | HDI-U | 18,7 | Polyester 3 | 21,4 | Polyether 2 | 59,9 | - | - | 20/80/- |
| I8 | HDI-U | 19,6 | Polyester 4 | 17,8 | Polyether 2 | 62,6 | - | - | 20/80/- |
| I9 | HDI-U | 19,9 | Polyester 5 | 16,7 | Polyether 2 | 63,4 | - | - | 20/80/- |
| I10 | HDI-U | 21,1 | Polyester 2 | 78,9 | - | - | - | - | 100/-/- |
| I11 | HDI-U | 14,1 | - | - | Polyether 1 | 78,6 | Polysiloxan 1 | 7,3 | -/90/10 |
| I12 | HDI-U | 15,6 | Polyester 6 | 78,1 | - | - | n-Decanol | 6,3 | 50/-/50 |
| I13 | HDI-U | 19,6 | Polyester 1 | 56,0 | Polyether 2 | 21,1 | MPG | 3,3 | 50/25/25 |

| | | | | | | | | | |
|---|---|---|---|---|---|---|---|---|---|
| Legende zu Tabelle 3: HDI-U: = Aliphatisches HDI-Uretdion, Desmodur N3400, Bayer AG Polyester 1: = Hexadecanol-gestarteter monohydroxyfunktioneller ε-Caprolactonpolyester, OH-Zahl: 47 mg KOH/g Polyester 2: = MPEG 350-gestarteter monohydroxyfunktioneller ε-Caprolactonpolyester, OH-Zahl: 78 mg KOH/g Polyester 3: Decanol-gestarteter monohydroxyfunktioneller ε-Caprolactonpolyester, OH-Zahl: 51 mg KOH/g Polyester 4: = MPEG 500-gestarteter monohydroxyfunktioneller ε-Caprolactonpolyester, OH-Zahl: 64 mg KOH/g Polyester 5: Decanol-gestarteter monohydroxyfunktioneller ε-Caprolactonpolyester, OH-Zahl: 69 mg KOH/g Polyester 6: = Decanol-gestarteter monohydroxyfunktioneller Polyester aus ε-Caprolacton und δ-Valerolacton im molaren Verhältnis 3:1, OH-Zahl: 29 mg KOH/g Polyether 1: = Butoxypolypropylenglykol, OH-Zahl: 47 mg KOH/g Polyether 2: = Butoxypolypropylenglykol, OH-Zahl: 73 mg KOH/g Polyether 3: = Methoxypolyethylenglykol, OH-Zahl: 112 mg KOH/g Polyether 4: = Butoxypolypropylenglykol, OH-Zahl: 33 mg KOH/g Polysiloxan 1: = Silaplane FM-0411; Monohydroxy-funktionelles Polysiloxan, Jnc America MPG: = Monophenylglykol | | | | | | | | | |

### Allgemeine Herstellvorschrift zu den in der nachfolgenden Tabelle aufgeführten Herstellungsbeispielen:

### Allgemeine Herstellvorschriften zur Umsetzung des Polyamins mit einem Uretdion-Intermedio der allgemeinen Formel (III):

In einem mit Rückflusskühler, Rührer, Thermometer und Stickstoffeinleitungsrohr versehenen Vierhalskolben wird die angegebene Menge Polyamin vorgelegt und auf 90 °C erwärmt. Sobald diese Temperatur erreicht ist, wird die angegebene Menge des Uretdion-Intermedios zugegeben. Je nach Viskosität wird das Intermedio dazu erwärmt. Die Reaktion kann etwas exotherm sein, braucht aber nicht gekühlt zu werden, die frei werdende Energie wird zur Reaktionsbeschleunigung genutzt. Bei der sich einstellenden Temperatur wird die Reaktionsmischung zwei Stunden gerührt.

### Allgemeine Herstellvorschriften zur weiteren Umsetzung mit Komponente 2:

### Komponente 2 = Epoxid:

Die angegebene Menge des Epoxids wird in einer Portion dem Reaktionsgemisch zugegeben und dieses auf 140 °C erwärmt. Der Ansatz wird bei dieser Temperatur gerührt bis sich das Epoxid vollständig umgesetzt hat, was sich z. B. über NMR-Messungen verfolgen lässt.

### Komponente 2 = Acrylat:

Die angegebene Menge des Acrylats wird in einer Portion dem Reaktionsgemisch bei 80 °C zugegeben. Das Reaktionsgemisch wird bei dieser Temperatur gerührt bis sich das Acrylat vollständig umgesetzt hat, was sich ebenfalls z. B. über NMR-Messungen verfolgen lässt.

### Komponente 2 = Monoaddukt:

Die angegebene Menge des Monoaddukts wird mit einem Tropftrichter dem Reaktionsgemisch bei 80 °C zudosiert. Das Reaktionsgemisch wird bei dieser Temperatur drei Stunden gerührt.

### PAS12:

Die angegebene Menge P-Säure 1 wird mit einem Tropftrichter dem Reaktionsgemisch bei 80 °C langsam zudosiert. Das Reaktionsgemisch wird anschließend bei 100 °C zwei Stunden gerührt.

### PAS15:

Die angegebene Menge C-Säure 1 wird mit einem Tropftrichter dem Reaktionsgemisch bei 80 °C langsam zudosiert. Das Reaktionsgemisch wird anschließend bei 100 °C zwei Stunden gerührt.

**Tabelle 4 - Herstellunasbeispiele**

| Beispiel Nr. | Polyamin | Gew.-% | Uretdion-Intermedio | Gew.-% | Komponente 2 | Gew.-% | Lösemittel | Gew.-% |
|---|---|---|---|---|---|---|---|---|
| PAS1 | PA2 | 13,4 | I1 | 83,2 | Epoxid 1 | 3,4 | PMA | 50,0 |
| PAS2 | PA1 | 11,4 | I2 | 79,0 | Acrylat 1 | 9,6 | - | - |
| PAS3 | PA9 | 10,6 | I5 | 80,4 | Acrylat 1 | 9,0 | - | - |
| PAS4 | PA9 | 13,5 | I2 | 74,9 | Acrylat 1 | 11,6 | - | - |
| PAS5 | PA2 | 9,4 | I5 | 87,3 | Acrylat 3 | 3,3 | - | - |
| PAS6 | PA9 | 13,3 | I9 | 75,5 | Acrylat 1 | 11,2 | - | - |
| PAS7 | PA8 | 13,8 | I2 | 74,7 | Acrylat 1 | 11,5 | - | - |
| PAS8 | PA9 | 6,8 | I3 | 28,5 | Acrylat 2 | 14,7 | PMA | 50,0 |
| PAS9 | PA1 | 10,8 | I2 | 74,4 | Acrylat 1 | 14,8 | - | - |
| PAS10 | PA9 | 13,4 | I4 | 75,3 | Acrylat 1 | 11,3 | - | - |
| PAS11 | PA2 | 12,4 | I4 | 85,4 | Epoxid 2 | 2,2 | - | - |
| PAS12 | PA16 | 9,4 | I10 | 74,3 | P-Säure 1 | 16,3 | - | - |
| PAS13 | PA15 | 6,9 | I11 | 89,1 | Acrylat 3 | 4,0 | - | - |
| PAS14 | PA9 | 19,2 | I3 | 80,8 | - | - | - | - |
| PAS15 | PA7 | 9,4 | I12 | 77,4 | C-Säure 1 | 13,2 | - | - |
| PAS16 | PA9 | 5,1 | I6 | 50,6 | Acrylat 1 | 4,3 | PMA | 40,0 |
| PAS17 | PA9 | 12,7 | I7 | 76,6 | Acrylat 1 | 10,7 | - | - |
| PAS18 | PA9 | 13,1 | I8 | 75,7 | Acrylat 1 | 11,2 | - | - |
| PAS19 | PA20 | 10,3 | I5 | 83,1 | Acrylat 3 | 6,6 | - | - |
| PAS20 | PA4 | 7,6 | I5 | 87,4 | Acrylat 3 | 5,0 | - | - |
| PAS21 | PA5 | 9,9 | I5 | 86,2 | Acrylat 3 | 3,9 | - | - |
| PAS22 | PA21 | 10,9 | I1 | 58,3 | Monoaddukt M 2 | 30,8 | - | - |
| VGL1* | PEI 1200 | 13,3 | I9 | 75,5 | Acrylat 1 | 11,2 | - | - |

| | | | | | | | | |
|---|---|---|---|---|---|---|---|---|
| Der Stern "*" kennzeichnet ein nicht erfindungsgemäßes Vergleichsbeispiel VGL: = ein nicht erfindungsgemäßes Vergleichsbeispiel Acrylat 1: = 2-Ethylhexylacrylat Acrylat 2: = Polypropylenglykolmonoacrylat, Blemmer AP 400, Sartomer Acrylat 3: = n-Butylacrylat Epoxid 1: = 2-Ethylhexylglycidylether Epoxid 2: = n-Butylglycidether PEI 1200: = Polyethylenimin, Epomin SP012, Nippon Shokubai PMA: = 1-Methoxy-2-propylacetat C-Säure 1 = Tallölfettsäure, SZ: 195 mg KOH/g P-Säure 1: = Phosphoryliertes Isotridecanol-gestartetes Polyethylenglykol, SZ: 105 mg KOH/g Monoaddukt M 2: = Umsetzungsprodukt von Polyether 2 mit Desmodur T 100 (siehe Tabelle 7) | | | | | | | | |

### Allgemeine Herstellvorschrift zu den in der nachfolgenden Tabelle beschriebenen Herstellungsbeispielen:

In einem mit Rührer, Thermometer, Rückflusskühler und Stickstoffeinleitungsrohr versehenen Vierhalskolben werden die angegebene Menge Polyamin mit der angegebenen Menge ε-Caprolacton und 200 ppm Dibutylzinndilaurat vorgelegt, unter Rühren auf 170 °C erwärmt und bei dieser Temperatur gerührt bis ein Festkörpergehalt von 98 % erreicht ist.

**Tabelle 5 - Herstellungsbeispiele**

| Beispiele Nr. | Polyamin | Menge x in [g] | Komponente 1 | Menge x in [g] | AZ in mg KOH/g |
|---|---|---|---|---|---|
| PAS23 | PA2 | 6,9 | ε-Caprolacton | 93,1 | 18,2 |
| PAS24 | PA9 | 6,9 | ε-Caprolacton | 93,1 | 22,0 |
| VGL2* | PEI 1200 | 6,9 | ε-Caprolacton | 93,1 | 29,7 |

| | | | | | |
|---|---|---|---|---|---|
| Der Stern "*" kennzeichnet ein nicht erfindungsgemäßes Vergleichsbeispiel VGL: = ein nicht erfindungsgemäßes Vergleichsbeispiel PEI 1200: = Polyethylenimin, Epomin SP012, Nippon Shokubai | | | | | |

### Allgemeine Herstellvorschrift zu den in der nachfolgenden Tabelle beschriebenen Herstellungsbeispielen:

### Umsetzung mit Epoxidkomponenten:

In einem mit Rührer, Thermometer, Rückflusskühler, Tropftrichter und Stickstoffeinleitungsrohr versehenen Vierhalskolben wird die angegebene Menge Polyamin vorgelegt und auf 100 °C erwärmt. Unter Rühren wird die angegebene Menge der Epoxidkomponente langsam zudosiert, wobei die Reaktionstemperatur 120 °C nicht überschreiten sollte. Anschließend wird bei 120 °C bis zur vollständigen Umsetzung der Epoxidkomponente gerührt. Der Reaktionsfortschritt lässt sich z. B. über NMR-Messungen verfolgen.

### Umsetzung mit Acrylatkomponente:

Die Umsetzung eines bereits mit einer Epoxidkomponente umgesetzten Polyamins erfolgt analog der Umsetzung des reinen Polyamins mit einer Acrylatkomponente. In einem mit Rührer, Thermometer, Rückflusskühler, Tropftrichter und Stickstoffeinleitungsrohr versehenen Vierhalskolben wird die angegebene Menge Polyamin vorgelegt und auf 60 °C erwärmt. Die angegebene Menge der Acrylatkomponente wird langsam zudosiert, wobei die Reaktionstemperatur 90 °C nicht überschreiten sollte. Anschließend wird bei 80 °C bis zur vollständigen Umsetzung der Acrylatkomponente gerührt. Der Reaktionsfortschritt kann via NMR-Messungen verfolgt werden.

Wird das Polyamin mit einer Epoxidkomponente und einer Acrylatkomponente umgesetzt, so erfolgt die Umsetzung mit dem Epoxid bevorzugt zuerst.

**Tabelle 6 - Herstellungsbeispiele**

| Beispiele Nr. | Polyamin | Gew.-% | Epoxid | Gew.-% | Acrylat | Gew.-% |
|---|---|---|---|---|---|---|
| PAS25 | PA18 | 29,3 | - | - | Acrylat 2 | 70,7 |
| PAS26 | PA3 | 29,5 | G RV 1814 | 10,9 | Acrylat 2 | 59,6 |
| PAS27 | PA6 | 39,9 | - | - | Acrylat 2 | 60,1 |
| PAS28 | PA10 | 46,8 | - | - | Acrylat 2 | 53,2 |
| PAS29 | PA17 | 37,6 | n-BGE | 7,0 | Acrylat 2 | 55,4 |
| PAS30 | PA13 | 43,0 | - | - | Acrylat 2 | 57,0 |
| PAS31 | PA11 | 45,4 | - | - | Acrylat 2 | 54,6 |
| PAS32 | PA12 | 57,6 | - | - | Acrylat 2 | 42,4 |
| PAS33 | PA19 | 36,2 | G RV 1814 | 16,9 | Acrylat 4 | 46,9 |
| PAS34 | PA22 | 47,7 | - | - | Acrylat 2 | 52,3 |
| PAS35 | PA14 | 24,2 | - | - | Acrylat 2 | 47,7 |

| | | | | | | |
|---|---|---|---|---|---|---|
| Acrylat 4: = Polyethylenglycol monoacrylat, Blemmer AE 200, Sartomer G RV 1814: = C13-C15 Alkylglycidether, Grilonit RV 1814, Ems-Chemie AG n-BGE = n-Butylglycidether Acrylat 2: = Polypropylenglycol monoacrylat, Blemmer AP 400, Sartomer | | | | | | |

### Allgemeine Herstellvorschrift der Isocyanataddukte der allgemeinen Formel (II):

In einem mit Rührer, Thermometer, Tropftrichter, Rückflusskühler und Stickstoffeinleitungsrohr versehenen Vierhalskolben werden 33,4 g Desmodur T 100 (TDI 100, NCO-Gehalt = 48,8 Gew.-%) und 0,57 g Benzoylchlorid vorgelegt und gut durchmischt. Die angegebene Menge der Alkoholkomponente, die wasserfrei und bei Polyethern alkalifrei ist, wird langsam zudosiert, so dass die Temperatur 55 °C nicht übersteigt. Das Gemisch wird nach der Zudosierung weitere drei Stunden bei 55°C gerührt. Das überschüssige TDI wird mittels Dünnschichtverdampfer bei 150 °C aus dem Reaktionsgemisch entfernt.

**Tabelle 7 - Isocyanataddukte der allgemeinen Formel (II) (Monoaddukte)**

| Monoaddukt | Addition von | Menge x in [g] |
|---|---|---|
| M 1 | Polyester 4 | 67,9 |
| M 2 | Polyether 2 | 59,6 |
| M 3 | Polyether 4 | 131,8 |

| | | |
|---|---|---|
| Polyester 4: = MPEG 500-gestarteter monohydroxyfunktioneller ε-Caprolactonpolyester, OH-Zahl: 64 mg KOH/g Polyether 2: = Butoxypolypropylenglykol, OH-Zahl: 73 mg KOH/g Polyether 4: = Butoxypolypropylenglykol, OH-Zahl: 33 mg KOH/g | | |

### Allgemeine Herstellvorschrift zu den in der nachfolgenden Tabelle beschriebenen Herstellungsbeispielen:

### Umsetzung mit Epoxidkomponenten:

In einem mit Rührer, Thermometer, Rückflusskühler, Tropftrichter und Stickstoffeinleitungsrohr versehenen Vierhalskolben wird die angegebene Menge Polyamin vorgelegt und auf 100 °C erwärmt. Unter Rühren wird die angegebene Menge der Epoxidkomponente langsam zudosiert, wobei die Reaktionstemperatur 120 °C nicht überschreiten sollte. Anschließend wird bei 120 °C bis zur vollständigen Umsetzung der Epoxidkomponente gerührt. Der Reaktionsfortschritt lässt sich z. B. über NMR-Messungen verfolgen.

### Umsetzung mit Acrylatkomponenten:

In einem mit Rührer, Thermometer, Rückflusskühler, Tropftrichter und Stickstoffeinleitungsrohr versehenen Vierhalskolben wird die angegebene Menge Polyamin vorgelegt und auf 60 °C erwärmt. Die angegebene Menge der Acrylatkomponente wird langsam zudosiert, wobei die Reaktionstemperatur 100 °C nicht überschreiten sollte. Anschließend wird bei 80 °C bis zur vollständigen Umsetzung der Acrylatkomponente gerührt. Der Reaktionsfortschritt kann via NMR-Messungen verfolgt werden.

### Umsetzung mit Glycerincarbonat:

In einem mit Rührer, Thermometer, Rückflusskühler, Tropftrichter und Stickstoffeinleitungsrohr versehenen Vierhalskolben wird die angegebene Menge Polyamin vorgelegt und auf 80 °C erwärmt. Die angegebene Menge Glycerincarbonat wird langsam zudosiert. Anschließend wird bei 80 °C bis zur vollständigen Umsetzung des Glycerincarbonats gerührt. Der Reaktionsfortschritt kann via NMR-Messungen verfolgt werden.

### Umsetzung mit ε-caprolacton:

In einem mit Rührer, Thermometer, Rückflusskühler, Tropftrichter und Stickstoffeinleitungsrohr versehenen Vierhalskolben wird die angegebene Menge Polyamin vorgelegt und auf 80 °C erwärmt. Die angegebene Menge ε-Caprolacton wird zugegeben. Anschließend wird bei 80 °C für zwei Stunden gerührt.

### Umsetzung mit Monoaddukten:

Wenn neben den Aminogruppen ebenfalls die mit Komponente 1 generierten oder bereits im Polyamin PA vorhandene Hydroxylgruppen mit einem Isocyanataddukt der allgemeinen Formel (II) (Monoaddukt) umgesetzt werden sollen, erfolgt die Umsetzung unter Zugabe von 200 ppm Dibutylzinndilaurat, ansonsten entspricht die Herstellvorschrift der Umsetzung eines Hydroxylgruppen-freien Polyamins mit einem Monoaddukt (Komponente 2).

In einem mit Rührer, Thermometer, Rückflusskühler, Tropftrichter und Stickstoffeinleitungsrohr versehenen Vierhalskolben wird die angegebene Menge Polyamin vorgelegt und auf 50 °C erwärmt. Die angegebene Menge Monoaddukt wird langsam zudosiert, so dass die Reaktionstemperatur 55 °C nicht übersteigt. Anschließend wird die Reaktionsmischung noch 2 Stunden bei 70 °C gerührt.

**Tabelle 8 - Herstellungsbeispiele**

| Beispiele Nr. | Polyamin | Gew.-% | Komp. 1 | Gew. - % | Komp. 2 | Gew.-% |
|---|---|---|---|---|---|---|
| PAS36 | PA8 | 15,2 | Grilonit RV 1814 | 13,0 | M 1 | 71,8 |
| PAS37 | PA8 | 19,1 | - | - | M 2 | 80,9 |
| PAS38 | PA8 | 15,2 | - | - | M 1 | 84,8 |
| PAS39 | PA16 | 15,5 | Grilonit RV 1814 | 10 | M 1 | 74,5 |
| PAS40 | PA16 | 8,3 | - | - | M 3 | 91,7 |
| PAS41 | PA16 | 13,0 | ε-Caprolacton | 6,4 | M 1 | 80,6 |
| PAS42 | PA16 | 12,8 | 4-Hydroxybutylacrylat | 7,9 | M 1 | 79,3 |
| PAS43 | PA16 | 14,5 | Glycerincarbonat | 3,0 | M 2 | 82,5 |
| PAS44 | PA23 | 12,3 | - | - | M 2 | 87,6 |

| | | | | | | |
|---|---|---|---|---|---|---|
| Komp.: = Komponente Grilonit RV 1814: = C13-C15 Alkylglycidether, Ems-Chemie AG | | | | | | |

### Allgemeine Herstellvorschrift zur Umsetzung von Aminen A mit polyfunktionellen Acrylaten und/oder Epoxiden zu Polyaminen PA nach Möglichkeit 3:

### Allgemeine Herstellvorschrift (Möglichkeit 3, Verfahren a):

In einem mit Rührer, Thermometer, Rückflusskühler und Stickstoffeinleitungsrohr versehenen Vierhalskolben wird das Amin A R1a) laut Tabelle mit dem gegebenenfalls aufgeführten Lösemittel (LM) vorgelegt. Unter N2-Gas werden die Reaktionskomponenten R1b) und R1c) unter Rühren langsam zudosiert, wobei die Reaktionstemperatur 100 °C nicht überschreiten sollte. Anschließend erfolgt eine Nachreaktion von zwei Stunden bei 100 °C.

### Allgemeine Herstellvorschrift (Möglichkeit 3, Verfahren b):

In einem mit Rührer, Thermometer, Rückflusskühler und Stickstoffeinleitungsrohr versehenen Vierhalskolben wird das Amin A R1a) laut Tabelle mit dem gegebenenfalls aufgeführten Lösemittel (LM) vorgelegt und auf 100 °C geheizt. Unter N2-Gas werden die Reaktionskomponenten R1b) und R1c) unter Rühren langsam zudosiert, wobei die Reaktionstemperatur 120 °C nicht überschreiten sollte. Anschließend erfolgt eine Nachreaktion von einer Stunde bei 110 °C.

**Tabelle 9 - Herstellungsbeispiele der Polyamine PA (Möglichkeit 3)**

| Bsp. | Ve | R 1a) | g R1a) | R 1b) | g R1b) | R 1c) | g R1c) | LM | g LM | % WS |
|---|---|---|---|---|---|---|---|---|---|---|
| PA24 | a | TETA | 43,8 | BA | 12,8 | HDDA | 45,2 | PM | 101,8 | 50 |
| PA25 | a | TETA | 43,8 | EHA | 18,4 | BDDA | 39,6 | PMA | 101,8 | 50 |
| PA26 | a | DETA | 30,9 | EHA | 18,4 | BDDA | 39,6 | PMA | 88,9 | 50 |
| PA27 | a | TEPA | 56,7 | EHA | 18,4 | HDDA | 45,2 | PMA | 180,5 | 40 |
| PA28 | a | TETA | 43,8 | EHA | 18,4 | HDDA | 45,2 | | | 100 |
| PA29 | a | TETA | 43,8 | EHA | 36,8 | TMPTA | 29,6 | PMA | 257,1 | 30 |
| PA30 | a | TETA | 30,2 | EHA | 15,3 | NPGA | 54,4 | | | 100 |
| PA31 | b | TETA | 43,8 | PGE | 15,0 | HDG | 46,0 | PM | 104,8 | 50 |
| PA32 | b | TETA | 43,8 | EPN | 45,6 | TMPG | 30,2 | PM | 279,1 | 30 |
| PA33 | b | TETA | 43,8 | CGE | 16,4 | HDG | 46,0 | PM | 70,8 | 60 |
| PA34 | b | TETA | 73,0 | CGE | 16,4 | HDG | 92,0 | PM | 181,4 | 50 |
| PA35 | b | TETA | 43,8 | EHA | 18,4 | HDG | 46,0 | PM | 108,2 | 50 |
| PA36 | b | Xy | 136 | EHG | 55 | NPDG | 77 | PM | 327 | 40 |
| PA37 | b | BHMT | 220 | BA | 30 | TMPG | 150 | PM | 650 | 35 |

| | | | | | | | | | | |
|---|---|---|---|---|---|---|---|---|---|---|
| Bsp. = Beispiel; Ve = Verfahren; WS = Wirksubstanz; PM = Methoxypropanol; PMA = Methoxypropylacetat; TETA = Triethylentetramin; TEPA = Tetraethylenpentamin; DETA = Diethylentriamin; BA = Butylacrylat; Xy = 1,4-Xylylendiamin; BHMT = Bis(hexamethylen)triamin; NPGA = Neopentylglycolpropylenoxydiacrylat; HDDA = 1,6-hexandioldiacrylat; TMPG = Trimethylolpropantriglycidether; EHA = 2-Ethylhexylacrylat; NPDG = Neopentylglykoldiglycidylether; TMPTA = Trimethylolpropantriacrylat; EPN = Epoxypropylneodecanoat; PGE = Phenylglycidether; CGE = Cresylglycidylether; HDG = 1,6-Hexandiglycidether; EHG = 2-Ethylhexylglycidylether; BDDA= 1,4-Butandioldiacrylat. | | | | | | | | | | |

### Umsetzung der Polyamine PA mit uretdionhaltigen Komponenten S der allgemeinen Formel (III):

### Herstellungsbeipiel PAS45:

In einem mit Rückflußkühler und Rührer versehenen Reaktionsgefäß werden 150 g uretdionhaltiges Vorprodukt 113 vorgelegt und auf 90 °C geheizt. Sobald diese Temperatur erreicht ist, werden 84,3 g Polyamin PA28 zugegeben. Anschließend wird die Reaktionsmischung noch eine Stunde bei 100 °C gerührt.

### Herstellungsbeipiel PAS46:

In einem mit Rückflußkühler und Rührer versehenen Reaktionsgefäß werden 100 g uretdionhaltiges Vorprodukt 113 vorgelegt und auf 90 °C geheizt. Sobald diese Temperatur erreicht ist, werden 92,7 g Polyamin PA33 zugegeben. Anschließend wird die Reaktionsmischung noch eine Stunde bei 100 °C gerührt.

### Vergleichsbeipiel VGL3*:

In einem mit Rückflußkühler und Rührer versehenen Reaktionsgefäß werden 150 g uretdionhaltiges Vorprodukt 113 vorgelegt und auf 90 °C geheizt. Sobald diese Temperatur erreicht ist, werden 84,3 g PEI 1200 zugegeben. Anschließend wird die Reaktionsmischung noch eine Stunde bei 100 °C gerührt.
* nicht erfindungsgemäß

### Umsetzung der Polyamine PA mit monocarboxylfunktionellen Polyestern der allgemeinen Formel (V):

### Herstellungsbeispiel PAS47:

In einem mit Rückflußkühler und Rührer versehenen Reaktionsgefäß wird eine Mischung von 100 g eines Laurinsäure gestarteten ε-Caprolactonpolyesters mit einer Säurezahl von 28 mg KOH/g mit 32 g Polyamin PA28 auf 120 °C geheizt und drei Stunden bei dieser Temperatur gerührt. Das so erhaltene Produkt ist bei RT fest und wachsartig.

### Umsetzung der Polyamine PA mit Phosphorsäureestern der allgemeinen Formel (VI):

### Herstellungsbeispiel PAS48:

In einem mit Rückflußkühler und Rührer versehenen Reaktionsgefäß wird eine Mischung von 92,5 g Polyester 3 mit 7,5 g Polyphosphorsäure auf 90 °C geheizt und drei Stunden bei dieser Temperatur gerührt. Nach Zugabe von 28 g Polyamin PA30 wird noch eine Stunde bei 100 °C gerührt. Das so erhaltene Produkt ist bei RT fest und wachsartig.

### Herstellungsbeispiel PAS49:

In einem mit Rückflußkühler und Rührer versehenen Reaktionsgefäß wird eine Mischung von 90 g Polyester 4 mit 10 g Polyphosphorsäure auf 90 °C geheizt und drei Stunden bei dieser Temperatur gerührt. Nach Zugabe von 45 g Polyamin PA25 wird noch eine Stunde bei 100 °C gerührt.

### Anwendungstechnische Prüfung

Verwendung der erfindungsgemäßen Polymere als Netz- und Dispergiermittel zur Herstellung von Pigmentkonzentraten und deren Einsatz in Lacksystemen

**Ausgangsstoffe**

| | |
|---|---|
| Uralac SN-804 S2-65 ND | Polyesterharz, Hersteller DSM Resins |
| Cymel 303 | Melamin-Formaldehyd-Harz, Hersteller Cytec Industries |
| Dynapol Catalyst 1203 | "geblockter" Sulfonsäurekatalysator, Hersteller Evonik |
| Ti-Pure R960 | Titandioxid-Pigment, Hersteller Du Pont |
| Aerosil R972 | Hydrophobe, pyrogene Kieselsäure, Hersteller Degussa |
| Spezial Schwarz 4 | Rußpigment, Hersteller Evonik |
| Heliogen Blau L 7101 F | Blaues Pigment, Hersteller BASF |
| Solvesso 150 ND | Aromatisches Lösemittel, Hersteller ExxonMobil |
| Dowanol PMA | 1-Methoxy-2-propylacetat, Hersteller Dow Chemical |
| Dowanol DPM | Dipropylenglykolmonomethylether, Hersteller Dow Chemical |
| DBE | "Dibasic Ester", Hersteller DuPont |
| Disperbyk 170 | Netz- und Dispergieradditiv, Hersteller BYK-Chemie |

### Arbeitsverfahren:

### Herstellung der Lacke:

### Ti-Pure R960:

### Mahlbedingungen:

Dispermat CV, Teflonscheibe, ∅ 4cm, 20 Min, 40 °C, 8000 rpm (18,8 m/s)
   Verhältnis Mahlgut zu Glasperlen (1 mm Durchmesser): 1 : 1 (Gewichtsteile)

### Spezial Schwarz 4:

### Mahlbedingungen:

Dispermat CV, Teflonscheibe, Ø 4cm, 60 Min, 40 °C, 10000 rpm
   Verhältnis Mahlgut zu Glasperlen (1 mm Durchmesser): 1 : 1 (Gewichtsteile)

### Heliogen Blau L 7101 F:

### Mahlbedingungen:

Dispermat CV, Teflonscheibe, Ø 4cm, 40 Min, 40 °C, 10000 rpm
   Verhältnis Mahlgut zu Glasperlen (1 mm Durchmesser): 1 : 1 (Gewichtsteile)

### Zusammensetzung der Lacke:

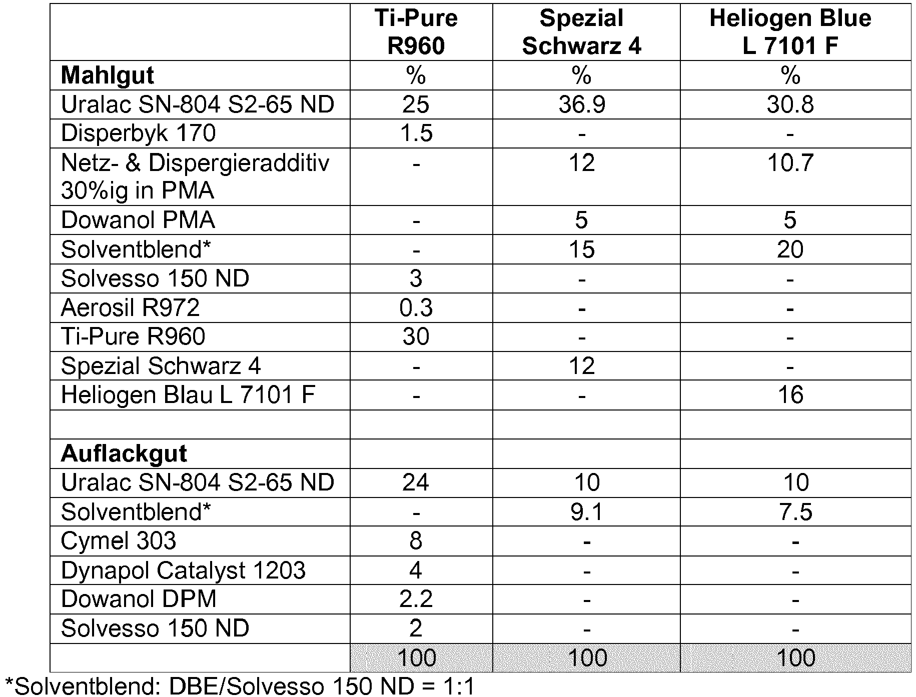

### Herstellung der Testformulierungen:

### Zusammensetzung der Testformulierungen:

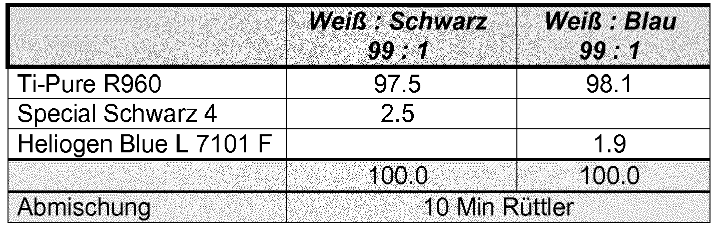

Die Viskosität der Testformulierungen wurde im Anschluss an die Herstellung mit Solvesso 150 ND auf 90 - 120 sec (DIN 4 -Auslaufbecher, 23°C) eingestellt.
Ein Teil der Testformulierung wurde 1 Woche bei 50°C gelagert.

### Applikation der Testformulierung:

Die Testformulierungen wurden nach Lagerung über Nacht unter den folgenden Bedingungen auf Substrate aufgetragen.

| | |
|---|---|
| Substrate: | Alcan Aluminiumbleche, vorbeschichtet mit einer etwa 5 µm dicken PU-Primerschicht |
| Rakelauftrag: | 80 µm (naß) |
| Ofentemperatur: | 320°C |
| Einbrennzeit: | 30 s |
| max. Metalltemperatur: | 235°C |
| Trockenfilmschichtdicke: | 18-20 µm |

Die Ausschwimm-, Aufschwimm- und Flokkulationseigenschaften wurden wie folgt evaluiert.

Die jeweilige Testformulierung wurde in 2 Portionen aufgeteilt.
Die jeweils erste Portion der betreffenden Testformulierung wurde mit einer Zahnscheibe bei 6000 Umdrehungen pro Minute für eine Minute gerührt und dann unmittelbar auf die rechte Hälfte der Substratoberfläche aufgetragen. Gleichzeitig wurde auf die linke Hälfte der Substratoberfläche die jeweils zweite Portion der betreffenden Testformulierung ohne vorheriges Rühren aufgetragen.

### Rub-Out-Test:

Unmittelbar nach der Applikation wurden die frisch aufgetragenen Lackschichten auf beiden Hälften der Substratoberfläche einem Rub-Out-Test unterzogen.
Hierzu wurden einige Stellen der frischen Lackschichten nach dem Auftrag mechanisch verrieben und anschließend die durch das Verreiben hervorgerufene Farbtonänderung (Rub-Out-Effekt) gegenüber dem nicht verriebenen Lack gemessen. Ursachen für den Rub-Out-Effekt sind z. B. Flokkulation und/oder Aufschwimmen von Pigmenten. Falls Pigmentflokkulate vorliegen, werden diese durch die Scherwirkung beim Reiben zerstört, und es entsteht der ursprünglich angestrebte Farbton. Der Rub-Out-Effekt lässt sich durch geeignete Dispergiermittel minimieren und ist somit ein Maß für die Wirksamkeit eines Dispergiermittels.

### Farbmetrische Messungen:

| | |
|---|---|
| Gerät: | Color guide, BYK-Gardner |
| Lichtart: | Normlicht D65 (Tageslicht) |
| Meßfeld: | 10° |
| Meßgeometrie: | d/8° spin (diffuse Beleuchtung, Beobachtungswinkel 8°) Anzahl der Messungen: n = 3 |

Die Ergebnisse der Farbmetrik sind in der folgenden Tabelle wiedergegeben. Der für eine Formulierung ermittelte ΔE-Wert gibt den Farbunterschied zwischen den verriebenen und den nicht verriebenen Stellen der Beschichtung an (Rub-Out-Effekt).
Δ E 1 Δ E nicht gerührt
Δ E 2 Δ E gerührt
Δ E 3 Δ E nicht gerührt / gerührt

| | Δ E 1 | Δ E 2 | Δ E 3 | Glanz 60° (n. gerührt) | Glanz 60° (gerührt) | Viskosität des blauen Pigmentkonzentrates |
|---|---|---|---|---|---|---|
| Nach Anreibung | | | | | | |
| VGL2* | 0,46 | 0,93 | 1,05 | 84,1 | 83,3 | thixotrop |
| PAS23 | 0,14 | 0,38 | 0,39 | 84,7 | 83,6 | thixotrop |
| PAS24 | 0,28 | 0,20 | 1,02 | 84,5 | 83,6 | thixotrop |
| VGL1* | 0,22 | 0,68 | 0,90 | 83,4 | 81,7 | thixotrop |
| PAS4 | 0,22 | 0,42 | 0,83 | 87,1 | 86,3 | thixotrop |

| Nach 1 Woche Lagerung bei 50 °C | | | | | | |
|---|---|---|---|---|---|---|
| VGL2* | 0,86 | 2,16 | 0,45 | 86,4 | 85,4 | |
| PAS23 | 0,52 | 1,45 | 0,29 | 86,9 | 86,4 | |
| PAS24 | 0,77 | 1,99 | 0,35 | 86,9 | 86,7 | |
| VGL1* | 1,32 | 2,48 | 0,52 | 83,4 | 82,6 | |
| PAS4 | 1,10 | 2,23 | 0,41 | 88,2 | 86,9 | |

| | | | | | | |
|---|---|---|---|---|---|---|
| Der Stern "*" kennzeichnet ein nicht erfindungsgemäßes Vergleichsbeispiel | | | | | | |

| | Δ E 1 | Δ E 2 | Δ E 3 | Glanz 60° (n. gerührt) | Glanz 60° (gerührt) | Viskosität des schwarzen Pigmentkonzentrates |
|---|---|---|---|---|---|---|
| Nach Anreibung | | | | | | |
| VGL2* | 0,26 | 0,28 | 0,50 | 83,9 | 82,3 | dünn |
| PAS23 | 0,15 | 0,14 | 0,25 | 84,5 | 83,1 | dünn |
| PAS24 | 0,23 | 0,13 | 0,40 | 84,8 | 83,5 | dünn |
| VGL1* | 0,46 | 0,41 | 0,65 | 84,2 | 83,5 | dünn |
| PAS4 | 0,13 | 0,34 | 0,44 | 85,2 | 84,8 | dünn |

| Nach 1 Woche Lagerung bei 50 °C | | | | | | |
|---|---|---|---|---|---|---|
| VGL2* | 0,26 | 0,68 | 0,37 | 80,9 | 80,6 | |
| PAS23 | 0,26 | 0,48 | 0,25 | 85,9 | 85,4 | |
| PAS24 | 0,25 | 0,56 | 0,32 | 85,4 | 85,6 | |
| VGL1* | 0,71 | 1,16 | 0,74 | 85,7 | 85,6 | |
| PAS4 | 0,62 | 0,94 | 0,09 | 87,0 | 87,3 | |

| | | | | | | |
|---|---|---|---|---|---|---|
| Der Stern "*" kennzeichnet ein nicht erfindungsgemäßes Vergleichsbeispiel | | | | | | |

Zu vergleichen miteinander sind PAS23 und PAS24 mit dem nicht erfindungsgemäßen Vergleichsbeispiel VGL2*. PAS4 ist hingegen mit dem nicht erfindungsgemäßen Vergleichsbeispiel VGL1* zu vergleichen. Diese Einteilung wird getroffen, auf Grund der strukturellen Ähnlichkeit von PAS23 und PAS24 zu VGL2* sowie der strukturellen Ähnlichkeit von PAS4 zu VGL1*.

**Ausgangsstoffe:**

| | |
|---|---|
| Uralac SN-804 S2-65 ND | Polyesterharz, Hersteller DSM Resins |
| Cymel 303 | Melamin-Formaldehyd-Harz, Hersteller Cytec Industries |
| Cycat 600 | "geblockter" Säurekatalysator, Hersteller Cytec Industries |
| Ti-Pure R960 | Titandioxid-Pigment, Hersteller Du Pont |
| Aerosil R972 | Hydrophobe, pyrogene Kieselsäure, Hersteller Degussa |
| Solvesso 150 ND | Aromatisches Lösemittel, Hersteller ExxonMobil |
| Dowanol PMA | 1-Methoxy-2-propylacetat, Hersteller Dow Chemical |
| Dowanol DPM | Dipropylenglykolmonomethylether, Hersteller Dow Chemical |
| Disperbyk 170 | Netz- und Dispergieradditiv, Hersteller BYK-Chemie |

### Arbeitsverfahren:

### Herstellung der Lacke:

### Ti-Pure R960:

### Mahlbedingungen:

Dispermat CV, Teflonscheibe, Ø 4cm, 20 Min, 40 °C, 8000 rpm (18,8 m/s) Verhältnis Mahlgut zu Glasperlen (1 mm Durchmesser): 1 : 1 (Gewichtsteile)

### Zusammensetzung der Lacke:

**Polyester/Melamin Topcoat basierend auf Uralac SN 804**

| **Mahlgut** | g |
|---|---|
| Uralac SN-804 S2-65 ND | 25 |
| Disperbyk 170 | 1.5 |
| Solvesso 150 ND | 3 |
| Aerosil R972 | 0.3 |
| Ti-Pure R960 | 30 |
| | |

| **Auflackgut** | |
|---|---|
| Uralac SN-804 S2-65 ND | 24 |
| Cymel 303 | 8 |
| Cycat 600* | 0,1 |
| Dowanol DPM | 2.2 |
| Solvesso 150 ND | 2 |

| | |
|---|---|
| * Die Formulierung wurde ohne den Katalysator hergestellt. Nach Überprüfung der chemischen Beständigkeit wurde 0,1 g Cycat 600 nachträglich hinzugegeben. | |

### Dosierung und Einarbeitung der Additive:

Die Zugabe der Additive erfolgte nach der Zugabe des Katalysators. Zuerst wurden 0,45 g des Additivs mit einem Spatel eingerührt und anschließend mit einem Dispermat CV, Zahnscheibe, Ø 4cm, 3 Min, 40 °C, 1865 rpm (3 m/s) eingearbeitet.

### Applikation der Testformulierung:

Die Viskosität der Testformulierungen wurde im Anschluss an die Herstellung mit Solvesso 150 ND auf 90 - 120 sec (DIN 4 -Auslaufbecher, 23°C) eingestellt.
Die Testformulierungen wurden nach Lagerung über Nacht unter den folgenden Bedingungen auf Substrate aufgetragen.

| | |
|---|---|
| Substrate: | Alcan Aluminiumbleche, vorbeschichtet mit einer etwa 5 µm dicken PU-Primerschicht |
| Rakelauftrag: | 80 µm (naß) |
| Ofentemperatur: | 320°C |
| max. Metalltemperatur: | 232 °C |
| Einbrennzeit: | 45 s |
| Trockenfilmschichtdicke: | 20 µm |

Nach dem Einbrennen wurden die Bleche in Wasser abgekühlt.
Zur Untersuchung der Clemen Härte wurden die Testformulierungen auf Weißbleche aufgetragen:

| | |
|---|---|
| Substrate: | Krüppel Weißbleche E1 |
| Rakelauftrag: | 80 µm (naß) |
| Ofentemperatur: | 273°C |
| max. Metalltemperatur: | 232 °C |
| Einbrennzeit: | 30 s |
| Trockenfilmschichtdicke: | 20 µm |

Nach dem Einbrennen wurden die Bleche in Wasser abgekühlt.

### Farbmetrische Messungen:

| | |
|---|---|
| Gerät: | Color-Guide, BYK-Gardner |
| Lichtart: | Normlicht D65 (Tageslicht) |
| Meßfeld: | 10° |
| Meßgeometrie: | d/8° spin (diffuse Beleuchtung, Beobachtungswinkel 8°) |
| Anzahl der Messungen: | n = 3 |

### Prüfung der Vernetzung der Lacke:

Zur Prüfung der Vernetzung der Lacke wurde ein Hammer (1 kg) in Methylethylketon eingetaucht. Direkt nach dem Eintauchen wurde der Hammer auf der Oberfläche hin- und hergerieben bis die Oberfläche zerstört war. Das Ergebnis wird in Doppelhüben dargestellt. Die angegebenen Zahlenwerte geben an wie viele Doppelhübe ausgeführt wurden, bis die Oberfläche zerstört war.

### Glanz Messung:

| | |
|---|---|
| Gerät: | Micro-TRI-Gloss, BYK Gardner |
| Winkel: | 60° |
| Anzahl der Messungen: | n = 3 |

### Bestimmung der Clemen Härte:

Der Zweck dieses Tests ist es die Kratzbeständigkeit der Lackoberfläche zu bewerten. Dies erfolgt unter Verwendung eines einstellbaren Gewichts von 0 - 20 Newton und eines Metallstiftes mit einer hemisphärischen Kugel von 1 mm Durchmesser, welche einen Schnitt von 30 mm verursacht. Der Grad der Eindringtiefe oder Zerstörung der Lackoberfläche wird dann ermittelt.

| | |
|---|---|
| Gerät: | Clemen Apparat, Typ: Multitester 74 |
| Prüfspitze: | Abgerundete Spitze |
| Ergebnisse: | Die Ergebnisse werden in Newton (N) angegeben |
| | |
| Clemen Härte: | Die angegebenen Werte stellen das Gewicht dar, bei dem die Oberfläche nicht zerstört wird. |

Die Ergebnisse der untersuchten Lackeigenschaften sind in der folgenden Tabelle wiedergegeben.

| **N+D Mittel** | **L** | **YE (313-98)** | **WE Index (Berger)** | **Glanz 60°** | **MEK Doppelhübe** | **Clemen (N)** |
|---|---|---|---|---|---|---|
| | **a** | | | | | |
| | **b** | | | | | |
| | (**ungerührt**) | | | | | |
| **VGL1*** | 92,73 | 4,10 | 72,21 | 54 | 38 | 2 |
| | - 1,44 | | | | | |
| | 2,61 | | | | | |
| **VGL2*** | 93,44 | 3,02 | 75,38 | 62 | 68 | 3 |
| | - 1,42 | | | | | |
| | 2,17 | | | | | |
| **PAS23** | 93,24 | 2,65 | 76,74 | 66 | 100 | 3 |
| | -1,54 | | | | | |
| | 1,98 | | | | | |
| **PAS24** | 93,63 | 2,58 | 77,02 | 67 | 100 | 3 |
| | -1,52 | | | | | |
| | 2,12 | | | | | |

| | | | | | | |
|---|---|---|---|---|---|---|
| Der Stern "*" kennzeichnet ein nicht erfindungsgemäßes Vergleichsbeispiel | | | | | | |

Wie der Tabelle zu entnehmen, zeigt der Lack mit den erfindungsgemäßen Beispielen eine geringere Vergilbung und einen höheren Weißgrad.
Beim MEK Test mit den erfindungsgemäßen Beispielen waren mehr Doppelhübe nötig um die Oberfläche zu zerstören. Dies spricht für eine bessere Vernetzung des Lackfilms im Vergleich zu den nicht erfindungsgemäßen Beispielen. Somit zeigen die erfindungsgemäßen Beispiele in Säure-katalysierten Einbrennsystemen einen klaren Vorteil gegenüber den auf Polyethylenimin basierenden Additiven.

Zur weiteren Beurteilung der erfindungsgemäßen Verbindungen wurden darüber hinaus Pigmentkonzentrate auf Basis des Anreibeharzes Laropal A81 (Aldehydharz, BASF) hergestellt. Die Angaben in den nachfolgenden Rezepturen sind in Gramm.

Zur Herstellung der Pigmentpasten werden die in den nachstehenden Tabellen angegebenen Rohstoffe nacheinander in einen 500 ml Dispermatentopf eingewogen, mit der gleichen Menge 2 mm Glasperlen versetzt und dann mit einer 40 mm Teflonscheibe bei 40 °C dispergiert. Beim Titandioxid Kronos 2360 beträgt die Dispergierzeit 30 Minuten bei 8000 U/min, beim Eisenoxid Bayferrox 130M 40 Minuten bei 8000 U/min, beim Heliogen Blue L71 01 F 40 Minuten bei 10000 U/min und beim Ruß Spezial Schwarz 4 60 Minuten bei 10.000 U/min.
Die dispergierten Pasten werden über ein Papiersieb (Maschenweite 80 µm) abgesiebt, und in Glasflaschen abgefüllt.

### Pastenrezepturen:

### Ausgangsstoffe:

| | |
|---|---|
| Laropal A 81 | Aldehydharz, Hersteller BASF |
| Dowanol PMA | 1-Methoxy-2-propylacetat, Hersteller Dow Chemical |
| BYK-Synergist 2100 | Pigmentsynergist, Hersteller BYK-Chemie |
| Aerosil R 972 | Hydrophobe, pyrogene Kieselsäure, Hersteller Evonik |
| Bayferrox 130 M | Rotes Pigment, Hersteller Bayer |
| Heliogen Blau L 7101 F | Blaues Pigment, Hersteller BASF |
| Spezial Schwarz 4 | Rußpigment, Hersteller Evonik |
| Kronos 2360 | Titandioxid-Pigment, Hersteller Kronos |

### (Mengenangaben in Gewichtsanteilen)

| Laropal A 81- Pasten | | | |
|---|---|---|---|
| | 130 M | L 7101 F | SS 4 |
| Laropal A-81 (60% in PMA) | 25 | 33,8 | 37,5 |
| Dowanol PMA | 8,6 | 41,0 | 34,5 |
| Dispergiermittel nach Herstellungsbeispiel | 6,0 | 6,3 | 8,0 |
| (100%ig) | | | |
| BYK-Synergist 2100 | - | 0,9 | - |
| Aerosil R 972 | 0,4 | - | - |
| Bayferrox 130 M | 60 | - | - |
| Heliogen Blau L 7101 F | - | 18 | - |
| Spezial Schwarz 4 | - | - | 20 |

| Weißpaste | |
|---|---|
| | A 81 |
| Laropal A-81 (60% in PMA) | 20 |
| Dowanol PMA | 13,3 |
| Dispergiermittel nach Herstellungsbeispiel (100%ig) | 1,3 |
| BYK-Synergist 2100 | - |
| Aerosil R 972 | 0,4 |
| Kronos 2360 | 65 |

| Weißabmischungen (A 81 Pasten) | | | | | | | | | |
|---|---|---|---|---|---|---|---|---|---|
| | Setalux 1765 | | | Paraloid B66 | | | Macrynal SM 510 | | |
| Klarlack | 14,5 | 18,5 | 19,1 | 19,0 | 18,5 | 19,1 | 12,7 | 12,5 | 12,5 |
| Härter | - | - | - | - | - | - | 6,3 | 6,1 | 6,6 |
| Verdünner | 4,5 | 4,5 | 4,5 | - | - | - | - | - | - |
| Xylol | - | - | - | 3,0 | 3,0 | 3,0 | - | - | - |
| Weißpaste | 9,9 | 9,9 | 9,9 | 9,9 | 9,9 | 9,9 | 9,9 | 9,9 | 9,9 |
| 130M-Paste | 1,1 | - | - | 1,1 | - | - | 1,1 | - | - |
| L7101F-Paste | - | 1,6 | - | - | 1,6 | - | - | 1,6 | - |
| SS4-Paste | - | - | 1,0 | 0,5 | | 1,0 | - | - | 1,0 |
| Abmischung | 10 Min Rüttler | | | | | | | | |

Zur Beurteilung der Flokkulationsstabilität wurden Rub-Out-Tests durchgeführt. Hierzu gießt man den Lack auf eine etwa 80° geneigte PE-Folie auf, lässt bis kurz vor dem Antrocknen ablüften und reibt mit dem Finger etwa 1/3 der Lackfläche bis zur Farbkonstanz aus. Nach Aushärtung des Films wird die Farbton-Differenz sowohl der ausgeriebenen als auch der nicht-ausgeriebenen Fläche als ΔE-Wert bestimmt. Je kleiner der ΔE-Wert, umso besser sind die Pigmente gegen Flokkulation und Entmischungserscheinungen stabilisiert.

### Klarlacke:

### Ausgangsstoffe:

| | |
|---|---|
| Setalux 1756 VV-65 | Acrylatharz 65%ig in Solvent Naphtha; Hersteller Nuplex |
| Setamine US 138 BB-70 | Melaminharz 70%ig in n-Butanol, Hersteller Nuplex |
| Shellsol A | Aromatisches Lösemittel, Hersteller Shell |
| BYK-310 | Verlaufsadditiv, Hersteller BYK-Chemie |
| Paraloid B-66 | thermoplastisches Acrylatharz, Hersteller Dow Chemicals |
| DIDP | Diisodecylphthalat |
| BYK-3550 | Verlaufsadditiv, Hersteller BYK-Chemie |
| Macrynal SM 510 | Acrylatharz 60%ig in Butylacetat; Hersteller Cytec |
| Dowanol PMA | 1-Methoxy-2-propylacetat, Hersteller Dow Chemicals |
| Solvent Naphtha | Aromatisches Lösemittel, Hersteller DHC Solvent Chemie |
| BYK-066N | Entschäumer, Hersteller BYK-Chemie |
| BYK-306 | Verlaufsadditiv, Hersteller BYK-Chemie |
| Desmodur N 75 | Aliphatisches Polyisocyanat (HDI-Biuret), 75%ig in 1-Methoxy-2-propylacetat; Hersteller Bayer |

| **Acrylat/Melamin** | |
|---|---|
| Setalux 1756 / Setamine US 138 BB-70 | |
| Setalux 1756 VV-65 | 60,0 |
| Setamine US 138 BB-70 | 24,0 |
| Shellsol A (Verdünner) | 8,0 |
| Xylol (Verdünner) | 7,8 |
| BYK-310 | 0,2 |
| 15 min ablüften, Einbrennen: 25 min 140°C (284°F) | |

| **TPA** | |
|---|---|
| Paraloid B-66 | |
| Paraloid B-66 (50% in Xylol) | 70,0 |
| DIDP | 2,0 |
| Xylol | 27,9 |
| BYK-3550 | 0,1 |

| **2 K PU/Acrylat** | | | |
|---|---|---|---|
| Macrynal SM 510 / Desmodur N 75 | | | |
| Klarlack | | Härterlösung | |
| Macrynal SM 510 (60% in Butylacetat) | 75,0 | Desmodur N 75 | 50,0 |
| Dowanol PMA | 5,0 | Butylacetat | 17,4 |
| Solvent Naphtha | 5,0 | Shellsol A | 17,6 |
| Xylol | 6,6 | Dowanol PMA | 5,0 |
| Butylacetat | 8,0 | Xylol | 10,0 |
| BYK-066N | 0,3 | | |
| BYK-306 | 0,1 | | |
| Klarlack : Härterlösung 2 : 1 | | | |

### Ergebnisse der Rubout-Tests:

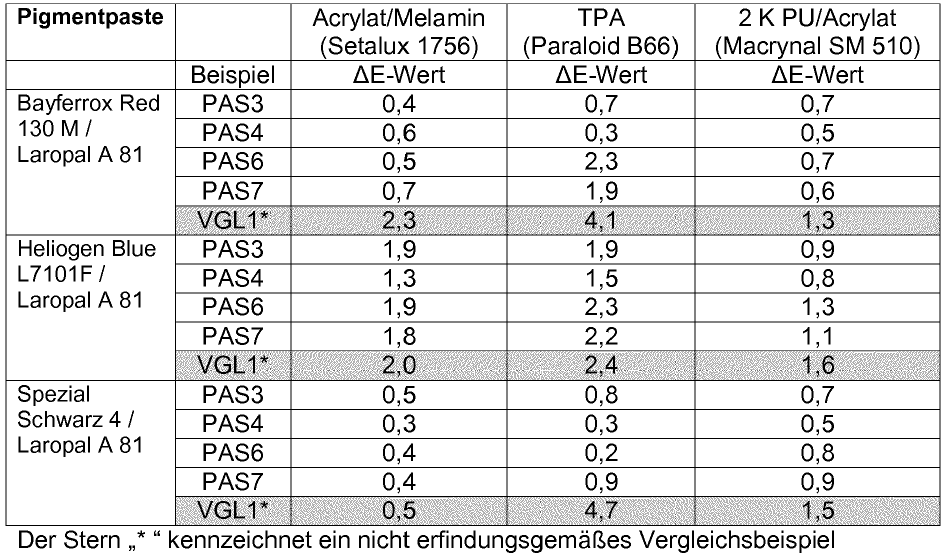

Die mit dem nicht erfindungsgemäßen Vergleichsbeispiel hergestellten Weißabmischungen zeigen in allen drei getesteten Systemen größere ΔE-Werte, somit eine geringere Stabilisierung der Pigmente gegen Flokkulation und Entmischungserscheinungen als die erfindungsgemäßen Beispiele.

Zur weiteren Beurteilung der erfindungsgemäßen Verbindungen wurden gelb pigmentierte polyesterbasierte Pulverlacke hergestellt und auf Aluminium Q-panels mittels einer elektrostatischen Pulverpistole bei 80kV/ 2 bar appliziert. Zur Aushärtung wurde 14 min bei 180 °C Umlufttemperatur eingebrannt. Die Bewertung erfolgte nach den Glanzwerten bei 20°. Je höher der Wert, desto besser das Ergebnis. Die Angaben in den nachfolgenden Rezepturen sind in Gramm.

### Pulverlackrezeptur:

| **Pos** | **Rohstoff** | |
|---|---|---|
| | Bindemittel / Härter | |
| 1 | Crylcoat 2617-3 | 82,1 |
| 2 | Primid XL-552 | 4,3 |
| | Gesamt | 86,4 |
| | | |
| 3 | Additiv | 3 |
| 4 | Benzoin | 0,4 |
| 5 | BYK-368 P | 1,2 |
| 6 | Pigment: C.I. Pigment Yellow 139 z.B. Paliotol Gelb L 2140 HD (BASF) | 12 |
| | | 16,6 |
| | 500g Ansätze auf Laborextruder ZSK18 (Fa. Coperion) | |
| | Premix ohne Pigmente | 5'2000 U/Min |
| | Temperaturen °C | 45/100/100/100/100 |
| | Drehmoment % | 45 ± 5 |
| | Drehzahl U/Mi. | 400 |

| | | |
|---|---|---|
| Crylcoat 2617-3: = carboxyliertes Polyesteharz, TG: 62°C, (Fa. Allnex) Primid XL-552: = Beta-Hydroxylamidvernetzer, OH-Zahl: 660, Fp: 120-124°C, (Fa. EMS-Chemie) Byk-368 P: = Polyacrylat basiertes Oberflächenadditiv ( Fa. Byk-Chemie) | | |

### Ergebnisse:

| **Beisp.** | **Eingesetztes Produkt** | **Glanz 20°** |
|---|---|---|
| 1 | PAS45 | 59 |
| 2 | PAS46 | 57 |
| 3 | PAS47 | 51 |
| 4* | VGL3* | 45 |

| | | |
|---|---|---|
| * (nicht erfindungsgemäß) | | |

## Patentansprüche

1. Aminogruppen enthaltendes Polymer PAS oder dessen durch Umsetzung mit einer Säure erhältliches Salz, wobei das Polymer durch eine mehrstufige Synthese erhältlich ist, bei der
ein Zwischenprodukt PA durch Reaktion mindestens einer Verbindung P mit mindestens einem Amin A hergestellt wird, wobei die Verbindung P
2 bis 6 gegenüber Hydroxylgruppen und/oder Aminogruppen reaktive Gruppen enthält und
das Amin A
(i) m = 1 bis 8 primäre und/oder sekundäre Aminogruppen,
(ii) n = 0 bis 5 Hydroxylgruppen und
(iii) I = 0 bis 5 tertiäre Aminogruppen enthält, wobei
(iv) m + n ≥ 2 beträgt und
(v) die Verbindung A neben Stickstoffatomen, Sauerstoffatomen und Hydroxylgruppen nur Kohlenwasserstoffgruppen enthält und
das Zwischenprodukt PA Struktureinheiten der allgemeinen Formel (I) 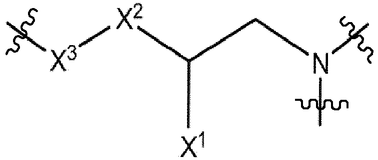 aufweist, in der
X¹ = H oder OH
X² = CH₂ oder C=O und
X³ = O oder NH
ist, und wobei
das Zwischenprodukt PA
(a) mit einer oder mehreren gegenüber Hydroxylgruppen und/oder Aminogruppen reaktiven Komponenten S zu einem Aminogruppen enthaltenden Polymer umgesetzt wird und/oder
(b) unter Ringöffnungspolymerisation mit mindestens einem Lacton oder einem Gemisch von Lactonen zu einem Aminogruppen enthaltenden Polymer umgesetzt wird
(c) und 0-80% der in dem Zwischenprodukt PA ursprünglich enthaltenen primären und sekundären Aminogruppen mit einer oder mehreren Spezies einer Komponente U, gewählt aus der Gruppe der hydroxylfunktionellen Acrylate und/oder einer zyklischen Verbindung gewählt aus der Gruppe der Oxirane und Oxetane, der Lactone und zyklischen Carbonate unter Einführung von Hydroxylgruppen umgesetzt werden,
wobei die Umsetzungen gemäß (a), (b) und (c) in jeder beliebigen Kombination und zeitlichen Reihenfolge zueinander erfolgen können.

2. Polymer PAS nach Anspruch 1, **dadurch gekennzeichnet, dass** das Zwischenprodukt PA durch Reaktion von ethylenisch ungesättigten Esterverbindungen P, bei denen die C=C-Doppelbindung und die Carbonyldoppelbindung des Esters konjugiert sind, mit Diaminen oder mit Aminen, die neben einer primären Aminogruppe mindestens eine weitere dem Ester gegenüber reaktive Gruppe oder neben einer sekundären Aminogruppe mindestens zwei weitere dem Ester gegenüber reaktive Gruppen enthalten, herstellbar ist.

3. Polymer PAS nach Anspruch 2, **dadurch gekennzeichnet, dass** die weiteren dem Ester gegenüber reaktiven Gruppen primäre oder sekundäre Aminogruppen und/oder Hydroxylgruppen sind.

4. Polymer PAS nach Anspruch 1, **dadurch gekennzeichnet, dass** das Zwischenprodukt PA ein dendritisches Polyamin ist, das in einer mehrstufigen Reaktion herstellbar ist, bei der in der ersten Stufe ein Amin A oder NH₃ und ein Alkylacrylat als Komponente P miteinander umgesetzt werden und das Reaktionsprodukt in mindestens einer weiteren Stufe mit einem stöchiometrischen Überschuss Diamin umgesetzt wird.

5. Polymer PAS nach Anspruch 1, **dadurch gekennzeichnet, dass** das Zwischenprodukt PA durch Umsetzung eines Amins A mit Verbindungen P, die zwei bis sechs Epoxidgruppen und/oder Acrylgruppen enthalten, herstellbar ist.

6. Polymer PAS nach Anspruch 1 - 5, **dadurch gekennzeichnet, dass** es sich bei Komponente S um ein Isocyanataddukt der allgemeinen Formel (II)
Y-O-CO-NH-R¹NCO (II)
handelt,
in der R¹ gleich oder verschieden sowie repräsentiert durch einen 6 bis 20 Kohlenstoffatome enthaltenden gesättigten oder ungesättigten, verzweigten oder unverzweigten organischen Rest und Y für eine nicht gegenüber Isocyanaten reaktive, monomere oder polymere Gruppe steht, die eine oder mehrere aliphatische, cycloaliphatische, araliphatische und/oder aromatische Gruppen umfasst, wobei Y eine zahlenmittlere Molmasse kleiner 20000 g/mol besitzt.

7. Polymer PAS nach Anspruch 1 - 5, **dadurch gekennzeichnet, dass** es sich bei Komponente S um eine Uretdionverbindung der allgemeinen Formel (III) 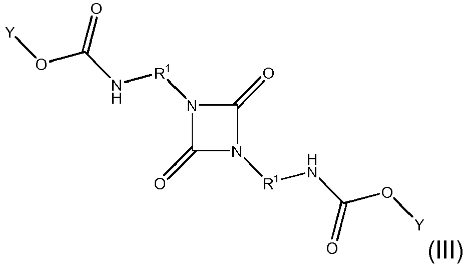 handelt,
in der R1 gleich oder verschieden sowie repräsentiert durch einen 6 bis 20 Kohlenstoffatome enthaltenden gesättigten oder ungesättigten, verzweigten oder unverzweigten organischen Rest und Y für eine nicht gegenüber Isocyanaten reaktive, monomere oder polymere Gruppen steht, die eine oder mehrere aliphatische, cycloaliphatische, araliphatische und/oder aromatische Gruppen umfasst, wobei Y eine zahlenmittlere Molmasse kleiner 20000 g/mol besitzt.

8. Polymer PAS nach Anspruch 1 - 5, **dadurch gekennzeichnet, dass** es sich bei Komponente S um ein Acrylat der allgemeinen Formel (IV)
H₂C=CH-COO-Y (IV)
handelt,
in der Y für eine nicht gegenüber Isocyanaten reaktive, monomere oder polymere Gruppe steht, die eine oder mehrere aliphatische, cycloaliphatische, araliphatische und/oder aromatische Gruppen umfasst, wobei Y eine zahlenmittlere Molmasse kleiner 20000 g/mol besitzt.

9. Polymer PAS nach Anspruch 1 - 5, **dadurch gekennzeichnet, dass** es sich bei Komponente S um eine Säure, gewählt aus der Gruppe der Carbonsäuren, Phosphorsäureester und Sulfonsäuren, handelt und das Polymer PAS erhältlich ist durch Umsetzung des Zwischenprodukts PA oder eines durch Umsetzung von PA gemäß einer oder mehreren der Umsetzungen (a), (b) und (c) modifizierten PA mit Verbindungen der allgemeinen Formeln (V), (VI) oder (VII)
(HOOC)ₚ-Y(X¹)ᵣ (V)
(OH)₃₋ᵥPO(O-Y(X¹)ᵣ)ᵥ (VI)
Y-SO₂-OH (VII)
in denen X¹ = H oder OH, p = 1 - 3, r = 1 - 5, v = 1 oder 2 und Y eine nicht gegenüber Isocyanaten reaktive, monomere oder polymere Gruppe ist, die eine oder mehrere aliphatische, cycloaliphatische, araliphatische und/oder aromatische Gruppen umfasst, wobei Y eine zahlenmittlere Molmasse kleiner 20000 g/mol besitzt.

10. Polymer PAS nach Anspruch 1 - 5, **dadurch gekennzeichnet, dass** es erhältlich ist durch Umsetzung des Zwischenprodukts PA oder eines durch Umsetzung von PA gemäß einer oder mehreren der Umsetzungen (a), (b) und (c) modifizierten PA mit mindestens einem Lacton oder einem Gemisch von Lactonen unter Ringöffnungspolymerisation.

11. Verfahren zur Herstellung eines Aminogruppen enthaltenden Polymers PAS durch eine mehrstufige Synthese, bei der ein Zwischenprodukt PA durch Reaktion mindestens einer Verbindung P mit mindestens einem Amin A hergestellt wird, wobei die Verbindung P
2 bis 6 gegenüber Hydroxylgruppen und/oder Aminogruppen reaktive Gruppen enthält und
das Amin A
(i) m = 1 bis 8 primäre und/oder sekundäre Aminogruppen,
(ii) n = 0 bis 5 Hydroxylgruppen und
(iii) I = 0 bis 5 tertiäre Aminogruppen enthält, wobei
(iv) m + n ≥ 2 beträgt und
(v) die Verbindung A neben Stickstoffatomen, Sauerstoffatomen und Hydroxylgruppen nur Kohlenwasserstoffgruppen enthält und
das Zwischenprodukt PA Struktureinheiten der allgemeinen Formel (I) 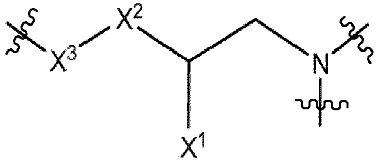 aufweist, in der
X¹ = H oder OH
X² = CH₂ oder C=O und
X³ = O oder NH
ist, und wobei
das Zwischenprodukt PA
(a) mit einer oder mehreren gegenüber Hydroxylgruppen und/oder Aminogruppen reaktiven Komponenten S zu einem Aminogruppen enthaltenden Polymer umgesetzt wird und/oder
(b) unter Ringöffnungspolymerisation mit mindestens einem Lacton oder einem Gemisch von Lactonen zu einem Aminogruppen enthaltenden Polymer umgesetzt wird
(c) und 0-80% der in dem Zwischenprodukt PA ursprünglich enthaltenen primären und sekundären Aminogruppen mit einer oder mehreren Spezies einer Komponente U, gewählt aus der Gruppe der hydroxylfunktionellen Acrylate und/oder einer zyklischen Verbindung gewählt aus der Gruppe der Oxirane und Oxetane, der Lactone und zyklischen Carbonate unter Einführung von Hydroxylgruppen umgesetzt werden,
wobei die Umsetzungen gemäß (a), (b) und (c) in jeder beliebigen Kombination und zeitlichen Reihenfolge zueinander erfolgen können.

12. Verfahren nach Anspruch 11, **dadurch gekennzeichnet, dass** zur Herstellung des Zwischenprodukts PA ethylenisch ungesättigte Esterverbindungen P, bei denen die C=C-Doppelbindung und die Carbonyldoppelbindung des Esters konjugiert sind mit Diaminen oder mit Aminen, die neben einer primären Aminogruppe mindestens eine weitere dem Ester gegenüber reaktive Gruppe oder neben einer sekundären Aminogruppe mindestens zwei weitere dem Ester gegenüber reaktive Gruppen enthalten, umgesetzt werden.

13. Verfahren nach Anspruch 12, **dadurch gekennzeichnet, dass** die weiteren dem Ester gegenüber reaktiven Gruppen primäre oder sekundäre Aminogruppen und/oder Hydroxylgruppen sind.

14. Verfahren nach Anspruch 11, **dadurch gekennzeichnet, dass** zur Herstellung eines dendritischen Polyamins als Zwischenprodukt PA in einer ersten Stufe Ammoniak oder ein Amin A und ein Alkylacrylat als Komponente P miteinander umgesetzt werden und das erhaltene Reaktionsprodukt in mindestens einer weiteren Stufe mit einem stöchiometrischen Überschuss Diamin umgesetzt wird.

15. Verfahren nach Anspruch 11, **dadurch gekennzeichnet, dass** zur Herstellung des Zwischenprodukts PA ein Amin A mit Verbindungen P, die zwei bis sechs Epoxidgruppen und/oder Acrylgruppen enthalten, umgesetzt wird.

16. Verfahren nach Anspruch 11 - 15, **dadurch gekennzeichnet, dass** es sich bei Komponente S um ein Isocyanataddukt der allgemeinen Formel (II)
Y-O-CO-NH-R¹NCO (II)
handelt,
in der R¹ gleich oder verschieden sowie repräsentiert durch einen 6 bis 20 Kohlenstoffatome enthaltenden gesättigten oder ungesättigten, verzweigten oder unverzweigten organischen Rest und Y für eine nicht gegenüber Isocyanaten reaktive, monomere oder polymere Gruppe steht, die eine oder mehrere aliphatische, cycloaliphatische, araliphatische und/oder aromatische Gruppen umfasst, wobei Y eine zahlenmittlere Molmasse kleiner 20000 g/mol besitzt.

17. Verfahren nach Anspruch 11 - 16, **dadurch gekennzeichnet, dass** es sich bei Komponente S um eine Urethdionverbindung der allgemeinen Formel (III) 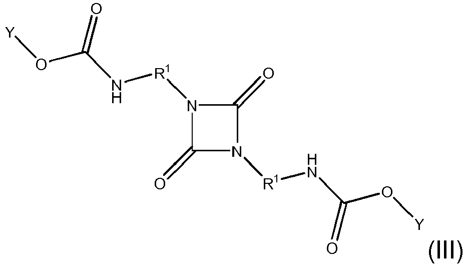 handelt,
in der R1 gleich oder verschieden sowie repräsentiert durch einen 6 bis 20 Kohlenstoffatome enthaltenden gesättigten oder ungesättigten, verzweigten oder unverzweigten organischen Rest und Y für eine nicht gegenüber Isocyanaten reaktive, monomere oder polymere Gruppen steht, die eine oder mehrere aliphatische, cycloaliphatische, araliphatische und/oder aromatische Gruppen umfasst, wobei Y eine zahlenmittlere Molmasse kleiner 20000 g/mol besitzt.

18. Verfahren nach Anspruch 11 - 17, **dadurch gekennzeichnet, dass** es sich bei Komponente S um ein Acrylat der allgemeinen Formel (IV)
H₂C=CH-COO-Y (IV)
handelt,
in der Y für eine nicht gegenüber Isocyanaten reaktive, monomere oder polymere Gruppen steht, die eine oder mehrere aliphatische, cycloaliphatische, araliphatische und/oder aromatische Gruppen umfasst, wobei Y eine zahlenmittlere Molmasse kleiner 20000 g/mol besitzt.

19. Verfahren nach Anspruch 11 - 18, **dadurch gekennzeichnet, dass** das Zwischenprodukt PA oder ein durch Umsetzung von PA gemäß einem oder mehreren der Umsetzungen gemäß (a), (b) und (c) modifiziertes PA mit Verbindungen der allgemeinen Formel (V), (VI) oder (VII)
(HOOC)ₚ-Y(X¹)ᵣ (V)
(OH)₃₋ᵥPO(O-Y(X¹)ᵣ)ᵥ (VI)
Y-SO₂-OH (VII)
umgesetzt wird,
in denen X¹ = H oder OH, p = 1 - 3, r = 1 - 5, v = 1 oder 2 und Y eine nicht gegenüber Isocyanaten reaktive, monomere oder polymere Gruppe ist, die eine oder mehrere aliphatische, cycloaliphatische, araliphatische und/oder aromatische Gruppen umfasst, wobei Y eine zahlenmittlere Molmasse kleiner 20000 g/mol besitzt.

20. Verfahren nach Anspruch 11 - 19, **dadurch gekennzeichnet, dass** das Zwischenprodukt PA oder ein durch Umsetzung von PA gemäß einer oder mehreren der Umsetzungen (a), (b) und (c) modifiziertes PA mit mindestens einem Lacton oder einem Gemisch von Lactonen unter Ringöffnungspolymerisation umgesetzt wird.

21. Verwendung des Aminogruppen enthaltenden Polymers PAS nach Anspruch 1 bis 10 als Netzmittel und/oder Dispergiermittel.

22. Lack enthaltend ein Aminogruppen enthaltendes Polymer PAS nach Anspruch 1 bis 10.

23. Kunststoff enthaltend ein Aminogruppen enthaltendes Polymer PAS nach Anspruch 1 bis 10.

## Claims

1. A polymer PAS containing amino groups, or the salt thereof obtainable by a reaction with an acid, wherein the polymer is obtainable by a multistage synthesis in which
an intermediate product PA is produced by reacting at least one compound P with at least one amine A, wherein the compound P contains 2 to 6 groups reactive to hydroxyl groups and/or amino groups, and
the amine A contains
(i) m = 1 to 8 primary and/or secondary amino groups,
(ii) n = 0 to 5 hydroxyl groups and
(iii) I = 0 to 5 tertiary amino groups, wherein
(iv) m+n≥ 2 and
(v) the compound A contains, in addition to nitrogen atoms, oxygen atoms and hydroxyl groups, only hydrocarbon groups, and
the intermediate product PA contains structural units of the general formula (I) 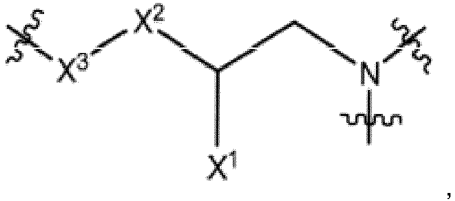 in which
X¹ = H or OH
X² = CH₂ or C=O and
X³ = O or NH,
and wherein the intermediate product PA
(a) is reacted with one or more components S reactive to hydroxyl groups and/or amino groups to give a polymer containing amino groups, and/or
(b) is reacted by ring-opening polymerization with at least one lactone or a mixture of lactones, to give a polymer containing amino groups,
(c) and 0-80 % of the primary and secondary amino groups initially present in the intermediate product PA are reacted with one or more species of a component U, selected from the group of hydroxyl-functional acrylates and/or a cyclic compound selected from the group of oxiranes and oxetanes, the lactones and the cyclic carbonates, by introduction of hydroxyl groups,
wherein the reactions according to (a), (b) and (c) can be carried out in any combination and temporal order with respect to one another.

2. The polymer PAS according to claim 1, **characterised in that** the intermediate product PA can be produced by reacting ethylenically unsaturated ester compounds P, in which the C=C double bound and the carbonyl double bond of the ester are conjugated, with diamines or with amines containing, in addition to one primary amino group, at least one further group reactive to the ester, or, in addition to one secondary amino group, at least two further groups reactive to the ester.

3. The polymer PAS according to claim 2, **characterised in that** the additional groups reactive to the ester are primary or secondary amino groups and/or hydroxyl groups.

4. The polymer PAS according to claim 1, **characterised in that** the intermediate product PA is a dendritic polyamine that can be produced by a multistage reaction, wherein, in the first stage, an amine A or NH₃ and an alkyl acrylate as component P are reacted with one another, and the reaction product is reacted, in at least one further stage, with a stoichiometric excess of diamine.

5. The polymer PAS according to claim 1, **characterised in that** the intermediate product PA can be produced by reacting an amine A with compounds P containing two to six epoxide groups and/or acryl groups.

6. The polymer PAS according to claim 1 to 5, **characterised in that** the component S is an isocyanate adduct of the general formula (II)
Y-O-CO-NH-R¹NCO (II),
in which R¹ is the same or different, and is represented by a saturated or unsaturated, branched or unbranched organic radical containing 6 to 20 carbon atoms, and Y represents a monomeric or polymeric group not reactive to isocyanates and comprising one or more aliphatic, cycloaliphatic, araliphatic and/or aromatic groups, wherein Y has a number average molecular mass of less than 20,000 g/mole.

7. The polymer PAS according to claim 1 to 5, **characterised in that** the component S is an uretdione compound of the general formula (III) 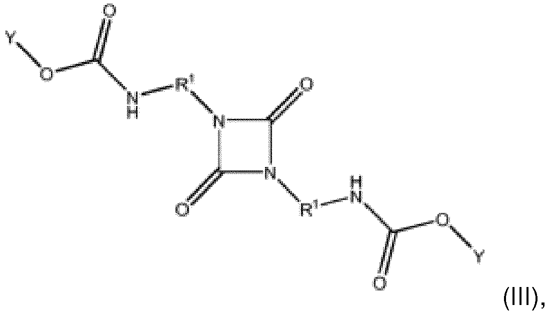 in which R¹ is the same or different, and is represented by a saturated or unsaturated, branched or unbranched organic radical containing 6 to 20 carbon atoms, and Y represents a monomeric or polymeric group not reactive to isocyanates and comprising one or more aliphatic, cycloaliphatic, araliphatic and/or aromatic groups, wherein Y has a number average molecular mass of less than 20,000 g/mole.

8. The polymer PAS according to claim 1 to 5, **characterised in that** the component S is an acrylate of the general formula (IV)
H₂C=CH-COO-Y (IV),
in which Y represents a monomeric or polymeric group not reactive to isocyanates and comprising one or more aliphatic, cycloaliphatic, araliphatic and/or aromatic groups, wherein Y has a number average molecular mass of less than 20,000 g/mole.

9. The polymer PAS according to claim 1 to 5, **characterised in that** the component S is an acid, selected from the group of the carboxylic acids, esters of phosphoric acids, and sulphonic acids, and the polymer PAS is obtainable by reacting the intermediate product PA, or a PA modified by reacting PA according to one or more of the reactions (a), (b) and (c), with compounds of the general formulae (V), (VI) or (VII)
(HOOC)ₚ-Y(X¹)ᵣ (V)
(OH)₃₋ᵥPO(O-Y(X¹)ᵣ)ᵥ (VI)
Y-SO₂-OH (VII),
in which X¹ = H or OH, p = 1 - 3, r = 1 - 5, v = 1 or 2, and Y is a monomeric or polymeric group not reactive to isocyanates and comprising one or more aliphatic, cycloaliphatic, araliphatic and/or aromatic groups, wherein Y has a number average molecular mass of less than 20,000 g/mole.

10. The polymer PAS according to claim 1 to 5, **characterised in that** it is obtainable by reacting the intermediate product PA, or a PA modified by reacting PA according to one or more of the reactions (a), (b) and (c), with at least one lactone or a mixture of lactones under ring-opening polymerisation.

11. A method for the production of a polymer PAS containing amino groups by a multistage synthesis in which an intermediate product PA is produced by reacting at least one compound P with at least one amine A, wherein the compound P contains
2 to 6 groups reactive to hydroxyl groups and/or amino groups, and
the amine A contains
(i) m = 1 to 8 primary and/or secondary amino groups,
(ii) n = 0 to 5 hydroxyl groups and
(iii) I = 0 to 5 tertiary amino groups, wherein
(iv) m+n≥ 2 and
(v) the compound A contains, in addition to nitrogen atoms, oxygen atoms and hydroxyl groups, only hydrocarbon groups, and
the intermediate product PA contains structural units of the general formula (I) 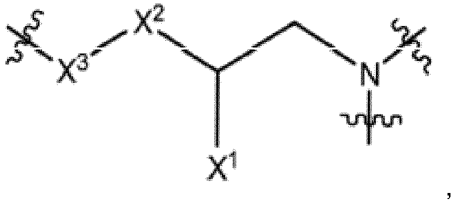 in which
X¹ = H or OH
X² = CH₂ or C=O and
X³ = O or NH,
and wherein
the intermediate product PA
(a) is reacted with one or more components S reactive to hydroxyl groups and/or amino groups to give a polymer containing amino groups, and/or
(b) is reacted by ring-opening polymerization with at least one lactone or a mixture of lactones, to give a polymer containing amino groups,
(c) and 0-80 % of the primary and secondary amino groups initially present in the intermediate product PA are reacted with one or more species of a component U, selected from the group of hydroxyl-functional acrylates and/or a cyclic compound selected from the group of oxiranes and oxetanes, the lactones and the cyclic carbonates, by introduction of hydroxyl groups,
wherein the reactions according to (a), (b) and (c) can be carried out in any combination and temporal order with respect to one another.

12. The method of claim 11, **characterised in that** for the production of the intermediate product PA ethylenically unsaturated ester compounds P, in which the C=C double bound and the carbonyl double bond of the ester are conjugated, are reacted with diamines or with amines containing, in addition to one primary amino group, at least one further group reactive to the ester, or, in addition to one secondary amino group, at least two further groups reactive to the ester.

13. The method according to claim 12, **characterised in that** the additional groups reactive to the ester are primary or secondary amino groups and/or hydroxyl groups.

14. The method according to claim 11, **characterised in that**, for the production of a dendritic polyamine as the intermediate product PA, in a first stage ammonia or an amine A and an alkyl acrylate as component P are reacted with one another, and the obtained reaction product is reacted, in at least one further stage, with a stoichiometric excess of diamine.

15. The method of claim 11, **characterised in that** for the production of the intermediate product PA an amine A is reacted with compounds P that contain two to six epoxide groups and/or acryl groups.

16. The method according to claim 11-15, **characterised in that** the component S is an isocyanate adduct of the general formula (II)
Y-O-CO-NH-R¹NCO (II),
in which R¹ is the same or different, and is represented by a saturated or unsaturated, branched or unbranched organic radical containing 6 to 20 carbon atoms, and Y represents a monomeric or polymeric group not reactive to isocyanates and comprising one or more aliphatic, cycloaliphatic, araliphatic and/or aromatic groups, wherein Y has a number average molecular mass of less than 20,000 g/mole.

17. The method according to claim 11 to 16, **characterised in that** the component S is a urethdione compound of the general formula (III) 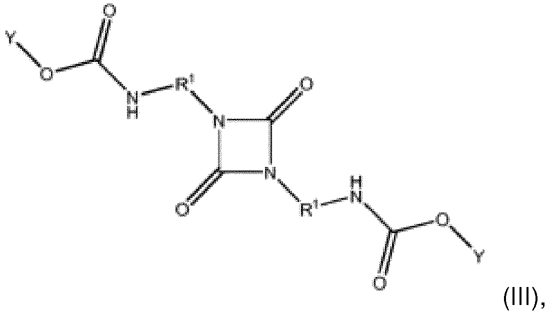 in which R¹ is the same or different, and is represented by a saturated or unsaturated, branched or unbranched organic radical containing 6 to 20 carbon atoms, and Y represents a monomeric or polymeric group not reactive to isocyanates and comprising one or more aliphatic, cycloaliphatic, araliphatic and/or aromatic groups, wherein Y has a number average molecular mass of less than 20,000 g/mole.

18. The method according to claim 11 to 17, **characterised in that** the component S is an acrylate of the general formula (IV)
H₂C=CH-COO-Y (IV),
in which Y represents a monomeric or polymeric group
not reactive to isocyanates and comprising one or more aliphatic, cycloaliphatic, araliphatic and/or aromatic groups, wherein Y has a number average molecular mass of less than 20,000 g/mole.

19. The method of claim 11 to 18, **characterised in that** the intermediate product PA or a PA modified by reacting PA according to one or more of the reactions according to (a), (b) and (c), is reacted with compounds of the general formula (V), (VI) or (VII)
(HOOC)ₚ-Y(X¹)ᵣ (V)
(OH)₃₋ᵥPO(O-Y(X¹)ᵣ)ᵥ (VI)
Y-SO₂-OH (VII),
in which X1 = H or OH, p = 1 - 3, r = 1 - 5, v = 1 or 2, and Y is a monomeric or polymeric group not reactive to isocyanates and comprising one or more aliphatic, cycloaliphatic, araliphatic and/or aromatic groups, wherein Y has a number average molecular mass of less than 20,000 g/mole.

20. The method according to claim 11 to 19, **characterised in that** the intermediate product PA, or a PA modified by reacting PA according to one or more of the reactions (a), (b) and (c), is reacted with at least one lactone or a mixture of lactones under ring-opening polymerisation.

21. Use of the polymer PAS containing amino groups according to claim 1 to 10 as a wetting agent and/or a dispersing agent.

22. Paint containing a polymer containing amino groups according to claim 1 to 10.

23. Plastic containing a polymer containing amino groups according to claim 1 to 10.

## Revendications

1. Polymère PAS contenant des groupes d'amine, ou le sel de ceci obtenable par réaction avec un acide, le polymère étant obtenable par une synthèse en plusieurs étapes, dans laquelle
un produit intermédiaire PA est produite par réaction d'au moins un composé P avec au moins une amine A, le composé P contenant
2 à 6 groupes réactifs avec les groupes hydroxyle et/ou groupes d'amine, et l'amine A contenant
(i) m = 1 à 8 groupes d'amine primaires et secondaires,
(ii) n = 0 à 5 groupes hydroxyle et
(iii) I = 0 à 5 groupes d'amine tertiaires, où
(iv) m+n≥ 2, et
(v) le composé A contient, outre des atomes d'azote, des atomes d'oxygène et des groupes hydroxyle, seulement des groupes d'hydrocarbures, et
le produit intermédiaire PA présente des unités structurelles de la formule générale (I) 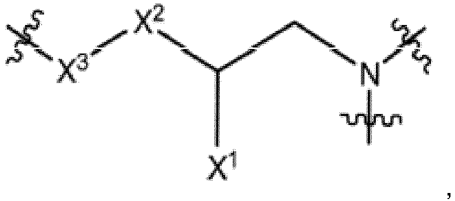 dans laquelle
X¹ = H ou OH
X² = CH₂ ou C=O et
X³ = O ou NH,
et où
le produit intermédiaire PA
(a) est réagi avec un ou plusieurs composants S réactifs avec les groupes hydroxyle et/ou les groupes d'amine, pour résulter en un polymère contenant des groupes d'amine, et/ou
(b) est réagi, par polymérisation par ouverture de cycle, avec au moins une lactone ou un mélange des lactones, pour résulter en un polymère contenant des groupes d'amine,
(c) et 0-80 % des groupes d'amine primaires et secondaires initialement contenus dans le produit intermédiaire PA sont réagis avec une ou plusieurs espèces d'un composant U, choisi dans le groupe des acrylates hydroxy-fonctionnels, et/ou un composé cyclique choisi dans le groupe des oxiranes et oxétanes, des lactones et des carbonates cycliques, par introduction des groupes hydroxyle,
où les réactions selon (a), (b) et (c) peuvent s'effectuer dans une combinaison et un ordre quelconque.

2. Polymère PAS selon la revendication 1, **caractérisé en ce que** le produit intermédiaire PA peut être produit par réaction des composés ester éthyléniquement non-saturés P, dans lesquels la double liaison C=C et la double liaison de carbonyle sont conjuguées, avec des diamines ou avec des amines, qui contiennent, outre un groupe d'amine primaire, au moins un autre groupe réactif avec l'ester, et, outre un groupe d'amine secondaire, au moins deux autres groupes réactifs avec l'ester.

3. Polymère PAS selon la revendication 2, **caractérisé en ce que** les autres groupes réactifs avec l'ester sont des groupes d'amine primaires ou secondaires, et/ou des groupes hydroxyle.

4. Polymère PAS selon la revendication 1, **caractérisé en ce que** le produit intermédiaire PA est une polyamine dendritique qui peut être produite par une réaction en plusieurs étapes, dans laquelle, dans une première étape, une amine A ou NH₃ et un acrylate d'alkyle comme composant P sont réagis l'une avec l'autre, et le produit de réaction est réagi, dans au moins une autre étape, avec un excès stoechiométrique de diamine.

5. Polymère PAS selon la revendication 1, **caractérisé en ce que** le produit intermédiaire PA peut être produit par réaction d'une amine A avec des composés P qui contiennent deux à six groupes d'époxy et/ou des groupes d'acryle.

6. Polymère PAS selon la revendication 1 à 5, **caractérisé en ce que** le composant S est un produit d'addition d'isocyanate de la formule générale (II)
Y-O-CO-NH-R¹NCO (II),
où R¹ est le même ou différent et représente un radical organique saturé ou non-saturé, ramifié ou non-ramifié et contenant de 6 à 20 atomes de carbone, et Y représente un groupe monomérique ou polymérique qui n'est pas réactif avec les isocyanates et comporte un ou plusieurs groupes aliphatiques, cycloaliphatiques, araliphatiques et/ou aromatiques, et Y présente une masse molaire moyenne en nombre inférieure à 20.000 g/mol.

7. Polymère PAS selon la revendication 1 à 5, **caractérisé en ce que** le composant S est un composé d'urétdione de la formule générale (III) 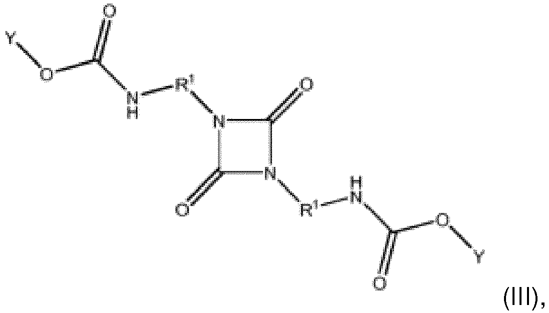 où R¹ est le même ou différent et représente un radical organique saturé ou non-saturé, ramifié ou non-ramifié et contenant de 6 à 20 atomes de carbone, et Y représente un groupes monomérique ou polymérique qui n'est pas réactif avec les isocyanates et comporte un ou plusieurs groupes aliphatiques, cycloaliphatiques, araliphatiques et/ou aromatiques, et Y présente une masse molaire moyenne en nombre inférieure à 20.000 g/mol.

8. Polymère PAS selon la revendication 1 à 5, **caractérisé en ce que** le composant S est un acrylate de la formule générale (IV)
H₂C=CH-COO-Y (IV),
où Y représente un groupe monomérique ou polymérique qui n'est pas réactif avec les isocyanates, et qui comporte un ou plusieurs groupes aliphatiques, cycloaliphatiques, araliphatiques et/ou aromatiques, et Y présente une masse molaire moyenne en nombre inférieure à 20.000 g/mol.

9. Polymère PAS selon la revendication 1 à 5, **caractérisé en ce que** le composant S est un acide, choisi dans le groupe des acides carboxyliques, des esters des acides phosphoriques et des acides sulfoniques, et le polymère PAS peut être obtenu par réaction du produit intermédiaire PA, ou d'un PA modifié par réaction du PA selon l'une ou plusieurs des réactions (a), (b) et (c), avec des composés des formules généraux (V), (VI) ou (VII)
(HOOC)ₚY(X¹)ᵣ (V)
(OH)₃₋ᵥPO(O-Y(X¹)ᵣ)ᵥ (VI)
Y-SO₂-OH (VII),
où X¹ = H ou OH, p = 1 - 3, r = 1 - 5, v = 1 ou 2, et Y représente un groupe monomérique ou polymérique qui n'est pas réactif avec les isocyanates et comporte un ou plusieurs groupes aliphatiques, cycloaliphatiques, araliphatiques et/ou aromatiques, et Y présente une masse molaire moyenne en nombre inférieure à 20.000 g/mol.

10. Polymère PAS selon la revendication 1 à 5, **caractérisé en ce qu'**il peut être obtenu par réaction du produit intermédiaire PA, ou d'un PA modifié par réaction du PA selon l'une ou plusieurs des réactions (a), (b) et (c), avec au moins une lactone ou un mélange des lactones, par polymérisation par ouverture de cycle.

11. Procédé pour fabriquer un polymère PAS contenant des groupes d'amine par une synthèse en plusieurs étapes, dans laquelle un produit intermédiaire PA est produite par réaction d'au moins un composé P avec au moins une amine A, le composé P contenant
2 à 6 groupes réactifs avec les groupes hydroxyle et/ou groupes d'amine, et l'amine A contenant
(i) m = 1 à 8 groupes d'amine primaires et secondaires,
(ii) n = 0 à 5 groupes hydroxyle et
(iii) I = 0 à 5 groupes d'amine tertiaires, où
(iv) m+n ≥ 2, et
(v) le composé A contient, outre des atomes d'azote, des atomes d'oxygène et des groupes hydroxyle, seulement des groupes d'hydrocarbures, et le produit intermédiaire PA a des unités structurelles de la formule générale (I) 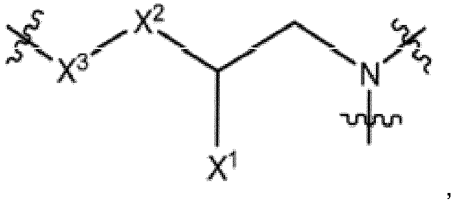
dans laquelle
X¹ = H ou OH
X² = CH₂ ou C=O et
X³ = O ou NH,
et où
le produit intermédiaire PA
(a) est réagi avec un ou plusieurs composants S réactifs avec les groupes hydroxyle et/ou les groupes d'amine, pour résulter en un polymère contenant des groupes d'amine, et/ou
(b) est réagi, par polymérisation par ouverture de cycle, avec au moins une lactone ou un mélange des lactones, pour résulter en un polymère contenant des groupes d'amine,
(c) et 0 à 80 % des groupes d'amine primaires et secondaires initialement contenus dans le produit intermédiaire PA sont réagis avec une ou plusieurs espèces d'un composant U, choisi dans le groupe des acrylates hydroxy-fonctionnels, et/ou un composé cyclique choisi dans le groupe des oxiranes et oxétanes, des lactones et des carbonates cycliques, par introduction des groupes hydroxyle,
où les réactions selon (a), (b) et (c) peuvent s'effectuer dans une combinaison et un ordre quelconque.

12. Procédé selon la revendication 11, **caractérisé en ce que**, pour fabriquer le produit intermédiaire PA, des composés ester éthyléniquement non-saturés P, dans lesquels la double liaison C=C et la double liaison de carbonyle sont conjuguées, sont réagis avec des diamines ou avec des amines, qui contiennent, outre un groupe d'amine primaire, au moins un autre groupe réactif avec l'ester, et, outre un groupe d'amine secondaire, au moins deux autres groupes réactifs avec l'ester.

13. Procédé selon la revendication 12, **caractérisé en ce que** les autres groupes réactifs avec l'ester sont des groupes d'amine primaires ou secondaires, et/ou des groupes hydroxyle.

14. Procédé selon la revendication 11, **caractérisé en ce que**, pour fabriquer une polyamine dendritique comme produit intermédiaire PA, de l'ammoniac ou une amine A et un acrylate d'alkyle sont réagis comme composant P dans une première étape, et le produit de réaction obtenu est réagi, dans au moins une autre étape, avec un excès stoechiométrique de diamine.

15. Procédé selon la revendication 11, **caractérisé en ce que**, pour fabriquer le produit intermédiaire PA, une amine A est réagie avec des composés P contenant de deux à six groupes époxyde et/ou groupes acryle.

16. Procédé selon la revendication 11 à 15, **caractérisé en ce que** le composant S est un produit d'addition d'isocyanate de la formule générale (II)
Y-O-CO-NH-R¹NCO (II),
où R¹ est le même ou différent et représente un radical organique saturé ou non-saturé, ramifié ou non-ramifié et contenant de 6 à 20 atomes de carbone, et Y représente un groupe monomérique ou polymérique qui n'est pas réactif avec les isocyanates et comporte un ou plusieurs groupes aliphatiques, cycloaliphatiques, araliphatiques et/ou aromatiques, et Y présente une masse molaire moyenne en nombre inférieure à 20.000 g/mol.

17. Procédé selon la revendication 11 à 16, **caractérisé en ce que** le composant S est un composé d'urétdione de la formule générale (III) 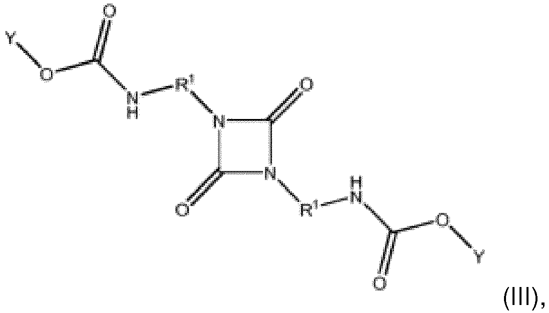 où R¹ est le même ou différent et représente un radical organique saturé ou non-saturé, ramifié ou non-ramifié et contenant de 6 à 20 atomes de carbone, et Y représente un groupes monomérique ou polymérique qui n'est pas réactif avec les isocyanates et comporte un ou plusieurs groupes aliphatiques, cycloaliphatiques, araliphatiques et/ou aromatiques, et Y présente une masse molaire moyenne en nombre inférieure à 20.000 g/mol.

18. Procédé selon la revendication 11 à 17, **caractérisé en ce que** le composant S est un acrylate de la formule générale (IV)
H₂C=CH-COO-Y (IV),
où Y représente un groupe monomérique ou polymérique qui n'est pas réactif avec les isocyanates, et qui comporte un ou plusieurs groupes aliphatiques, cycloaliphatiques, araliphatiques et/ou aromatiques, et Y présente une masse molaire moyenne en nombre inférieure à 20.000 g/mol.

19. Procédé selon la revendication 11 à 18, **caractérisé en ce que** le produit intermédiaire PA, ou un PA modifié par réaction du PA selon l'une ou plusieurs des réactions selon (a), (b) et (c), est réagi avec des composés des formules généraux (V), (VI) ou (VII)
(HOOC)ₚ-Y(X¹)ᵣ (V)
(OH)₃₋ᵥPO(O-Y(X¹)ᵣ)ᵥ (VI)
Y-SO₂-OH (VII),
où X¹ = H ou OH, p = 1 - 3, r = -5, v = 1 1 ou 2 , et Y représente un groupe monomérique ou polymérique qui n'est pas réactif avec les isocyanates et comporte un ou plusieurs groupes aliphatiques, cycloaliphatiques, araliphatiques et/ou aromatiques, et Y présente une masse molaire moyenne en nombre inférieure à 20.000 g/mol.

20. Procédé selon la revendication 11 à 19, **caractérisé en ce que** le produit intermédiaire PA, ou un PA modifié par réaction du PA selon l'une ou plusieurs des réactions (a), (b) et (c), est réagi avec au moins une lactone ou un mélange des lactones, par polymérisation par ouverture de cycle.

21. Utilisation du polymère PAS contenant des groupes d'amine selon la revendication 1 à 10 comme agent mouillant et/ou agent de dispersion.

22. Vernis contenant un polymère PAS contenant des groupes d'amine selon la revendication 1 à 10.

23. Matière plastique contenant un polymère PAS contenant des groupes d'amine selon la revendication 1 à 10.
